# EUROPEAN PATENT APPLICATION

(11) **EP 2 821 409 A1**
(43) Date of publication of application: **07.01.2015**
(21) Application number: 13175362.6
(22) Date of filing: 05.07.2013
(51) Int. Cl.: C07F 15/00, B01J 31/22, C07F 1/08, C07F 1/10, C07F 1/12

(54) **Metal alkylidene complexes comprising an unsymmetrical unsaturated NHC ligand**

(71) Applicant: Centre National de la Recherche Scientifique (CNRS), 75794 Paris Cedex 16 (FR); Ecole Nationale Supérieure de Chimie de Rennes, 35708 Rennes Cedex 7 (FR)
(72) Inventor: Mauduit, Marc, 35500 Vitré (FR); Basle, Olivier, 35000 Rennes (FR); Queval, Pierre, 35520 La Chapelle des Fougeretz (FR); Jahier, Claire, 35235 Thorigné-Fouillard (FR); Artur, Isabelle, 35500 Rennes (FR)
(74) Representative: Palacci, Jeremie

(57) **Abstract**

The present invention relates to metal alkylidene complex comprising a 1-aryl-3-alkyl-imidazol-2-ylidene ligand, wherein the aryl group of said 1-aryl-3-alkyl-imidazol-2-ylidene ligand is an aromatic and wherein the alkyl group of said 1-aryl-3-alkyl-imidazol-2-ylidene ligand is selected from the group consisting of a cyclic secondary aliphatic alkyl and a C₂-C₁₀-heteroalkyl, and wherein said metal is selected from the group consisting of Pd, Ag, Au, Ir, Rh, Cu, Ni, Mg, Zn, Ti, Pt and Fe, with the provision that the aryl group of said 1-aryl-3-alkyl-imidazol-2-ylidene ligand is other than an ortho-hydroxyaryl group when said metal is Pd and when said cyclic secondary aliphatic alkyl is cyclohexyl.

## Description

The present invention relates to metal complexes comprising an unsymmetrical unsaturated *N*-heterocyclic carbene, as well as to their synthesis.

*N*-heterocyclic carbenes (NHC's) are widely used in organometallic catalysis. This is mainly due to the fact that *N*-heterocyclic carbenes ligands can be combined with transition metals in order to form highly reactive complexes. Those complexes are generally known as *N-*heterocyclic carbene metal complexes.

The state of the art discloses various saturated *N*-heterocyclic ligands, some of which are saturated *N*-heterocyclic carbenes: imidazolin-2-ylidene compounds; others are unsaturated *N*-heterocyclic carbenes: imidazol-2-ylidene compounds. These types of ligands are particularly interesting for organometallic catalysis.

The publications NHCs in Synthesis, S. P. Nolan, Ed., 2006, Wiley-VCH ; NHCs in Transition Metal Catalysis, F. Glorius, Ed. 2006, Springer; N-Heterocyclic Carbenes, S. D. Diez-Gonzalez, Ed. 2011, RSC Catalysis Series, RSC Publishing disclose some *N*-heterocyclic carbene metallic complexes.

Today it is well known that NHC's not only improve the yield of numerous chemical reactions, but also enable carrying out new chemical reactions. For instance, NHC metallic complexes improve the yield of most metallo-catalyzed reactions, and are able to catalyze so called coupling reactions C-C, C-N, C-O, C-S, etc. These types of coupling reactions are used in industrial processes and fine chemistry as described in Dunetz et al., Chem. Rev. 2011, 111, 2177-2250. The greatest yield improvements have been obtained in olefin metathesis reactions, as reported in Grela et al., Chem. Rev. 2009, 109, 3708-3742.

The state of the art generally shows that symmetrical 1,3-disubstituted-imidazol(in)-2-ylidene ligands are used in organometallic catalytic systems.

Few state of the art documents show that unsymmetrical (or non-symmetrical, or dissymmetrical) 1,3-disubstituted-imidazol(in)-2-ylidene ligands can be used in organometallic catalytic systems. Blechert et al., Dalton Trans. 2012, 41, 8215-8225 reports improved reactivities and selectivities in chemical reactions using unsymmetrical carbene ligands. Grubbs et al., J. Am. Chem. Soc. 2011, 113, 7490-7496 shows that improved reactivity and selectivity can further be enhanced by using a NHC ligand that bears an aromatic group on one hand and an alkyl group on the other hand.

This shows that the substituent carbon groups of the NHC ligand have an influence on both selectivity and reactivity of organometallic catalytic systems. However, this type of substituent is very restricted when it comes to unsymmetrical 1,3-disubstituted-imidazol-2-ylidene diaminocarbenic ligands. This is due to the fact that the synthesis of unsymmetrical imidazolium precursor salts is difficult to achieve.

As a matter of fact, in order to synthesize unsymmetrical 1,3-disusbtituted-imidazolin-2-ylidene diaminocarbenic ligands, it is crucial to first generate an imidazolium precursor salt. The synthesis of such a salt requires numerous chemical operations (at least 4 to 6 distinct chemical operations), or is restricted to the choice of a very limited number of substituents of the NHC.

Organ et al., Angew. Chem. Int. Ed., 2007, 46, 2768-2813. and César et al. Chem. Rev. 2011, 111, 2701-2733 report about the complexity and limitation of the synthesis of unsymmetrical 1,3-disubstituted-imidazol-2-ylidene diaminocarbenic ligands.

Unsymmetrical 1,3-disubstituted-imidazol-2-ylidene diaminocarbenic ligands are of great scientific and economic interest. Yet, they cannot be synthesized industrially. This is due for instance to the fact that this synthesis requires consecutive complex chemical operations. Furthermore, the choice of substituents is very limited.

The state of the art does not describe any efficient and flexible method to synthesize ligands of the type 1-aryl-3-cycloalkyl-imidazol-2-ylidene (NHC substituted by one aromatic group and one cyclic secondary aliphatic alkyl group), and of the type 1-aryl-3-heteroalkyl-imidazol-2-ylidene (NHC substituted by one aromatic group and one heteroalkyl group). As a result, the state of the art also does not describe any metal complexes bearing one of those ligands.

The present invention improves the current situation.

The invention provides a metal alkylidene complex comprising a 1-aryl-3-alkyl-imidazol-2-ylidene ligand, wherein the aryl group of said 1-aryl-3-alkyl-imidazol-2-ylidene ligand is an aromatic and wherein the alkyl group of said 1-aryl-3-alkyl-imidazol-2-ylidene ligand is selected from the group consisting of a cyclic secondary aliphatic alkyl and a C₂-C₁₀-heteroalkyl, and wherein said metal is selected from the group consisting of Pd, Ag, Au, Ir, Rh, Cu, Ni, Mg, Zn, Ti, Pt and Fe. According to the invention, the aryl group of said 1-aryl-3-alkyl-imidazol-2-ylidene ligand is other than an *ortho*-hydroxyaryl group when said metal is Pd and when said cyclic secondary aliphatic alkyl is cyclohexyl.

According to an embodiment of the invention the metal alkylidene complex is of general formula I: 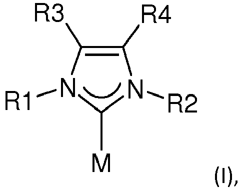 wherein

R1 is an aromatic group, R2 is selected from the group consisting of a cyclic secondary aliphatic alkyl and a C₂-C₁₀-heteroalkyl, R3 and R4 are selected independently from each other from the group consisting of hydrogen, halide and alkyl, and the metal M is selected from the group consisting of Pd, Ag, Au, Ir, Rh, Cu, Ni, Mg, Zn and Fe and is unsubstituted or substituted by one or more elements selected from the group consisting of hydrogen, halide, alkyl and heteroalkyl or a combination thereof.

According to different embodiments of the invention R1 can be chosen from the group consisting of 2,4,6-trimethylphenyl, 2,6-diisopropylphenyl, 2,6-dimethyl-4-hydroxyphenyl; R2 can be selected from the group consisting of cyclopentyl, cyclohexyl, cycloheptyl, cyclooctyl, cyclodecyl, cyclododecyl, and cyclopentadecyl, isopinocampheyl, alkylcarboxylic acid, alkylalcohol; and R3 and R4 can both be hydrogen.

The complex of the invention can be [(3-cyclopentyl-1-mesityl-imidazol-2-ylidene)-silver chloride], [(3-cyclododecyl-1-mesityl-imidazol-2-ylidene)-silver chloride], [(3-(1R,2S,3S,5R)-isopinocampheyl-1-mesityl-imidazol-2-ylidene)-silver chloride], [(3-cyclododecyl-2-diisopropylphenyl-imidazol-2-ylidene)-silver chloride], [3-((S)-2N-3-methylbutanoic acid)-1-mesityl-imidazol-2-ylidene)-silver chloride], [(3-cyclododecyl-1-mesityl-imidazol-2-ylidene)-copper chloride], [(3-(1R,2S,3S,5R)-isopinocampheyl-1-mesityl-imidazol-2-ylidene)-copper chloride], [(3-cyclododecyl-1-mesityl-imidazol-2-ylidene)-gold chloride], [(3-(1R,2S,3S,5R)-isopinocampheyl-1-mesityl-imidazol-2-ylidene)-gold chloride], [3-((S)-2N-3-methylbutanol)-1-mesityl-imidazol-2-ylidene)-gold chloride], [(3-cyclopentyl-1-mesityl-imidazol-2-ylidene)-(cyclooctadiene)-iridium chloride], [(3-cyclohexyl-1-mesityl-imidazol-2-ylidene)-(cyclooctadiene)-iridium chloride], [(3-cycloheptyl-1-mesityl-imidazol-2-ylidene)-(cyclooctadiene)-iridium chloride], [(3-cyclooctyl-1-mesityl-imidazol-2-ylidene)-(cyclooctadiene)-iridium chloride], [(3-cyclododecyl-1-mesityl-imidazol-2-ylidene)-(cyclooctadiene)-iridium chloride], [(3-cyclopentyl-1-mesityl-imidazol-2-ylidene)-(bis-(carbon monoxide))-iridium chloride], [(3-cyclohexyl-1-mesityl-imidazol-2-ylidene)-(bis-(carbon monoxide))-iridium chloride], [(3-cycloheptyl-1-mesityl-imidazol-2-ylidene)-(bis-(carbon monoxide))-iridium chloride], [(3-cyclooctyl-1-mesityl-imidazol-2-ylidene)-(bis-(carbon monoxide))-iridium chloride], [(3-cyclododecyl-1-mesityl-imidazol-2-ylidene)-(bis-(carbon monoxide))-iridium chloride], [(3-cyclododecyl-1-mesityl-imidazol-2-ylidene)-(allyl)-palladium chloride], [(3-cyclododecyl-1-diisopropylphenyl-imidazol-2-ylidene)-(allyl)-palladium chloride], [3-((S)-2N-3-methylbutanoic acid)-1-mesityl-imidazol-2-ylidene)-(allyl)-palladium], [(3-cyclododecyl-1-diisopropylphenyl-imidazol-2-ylidene)-(allyl)-palladium chloride], [(3-cyclopentyl-1-mesityl-imidazol-2-ylidene)-(cyclooctadiene)-rhodium chloride], or [(3-cyclododecyl-1-mesityl-imidazol-2-ylidene)-(cyclooctadiene)-rhodium chloride].

The metal alkylidene complex of the invention can be used as a catalyst. Particularily, the complexes of the invention can be used as catalysts in organo-metallic chemical reactions. The metal alkylidene complex of the invention can be used as catalyst in a chemical cross-coupling reaction such as conjugate addition, allylic alkylation, ketone arylation and Kumada reaction.

Furthermore the metal alkylidene complex of the invention can be used as a precursor reagent to generate an *in situ* metal alkylidene complex according to the invention.

Further advantages and features of the present invention will appear from the following detailed description and by considering the figures on which:
- Figure 1 represents the synthesis of 1-aryl-3-cycloalkyl-imidazolium salts;
- Figure 2 represents the synthesis of 1-aryl-3-cycloalkyl-imidazol-2-ylidene transition-metal complexes;
- Figure 3 represents the electronic and steric properties of dissymmetrical 1-mesityl-3-cyclododecyl-imidazol-2-ylidene resulting from unsymmetrical unsaturated salts;
- Figure 4 represents a steric map view of 1-mesityl-3-cyclododecyl-imidazol-2-ylidene transition-metal complexes according to the invention;
- Figure 5 represents the synthesis of chiral dissymmetrical 1-mesityl-3-isopinocampheyl-imidazol-2-ylidene transition-metal complexes of the invention starting from (+)-isopinocampheylamine;
- Figure 6 represents the one-pot synthesis of chiral hydroxyalkyl-imidazolium salts and carboxyalkyl-imidazolium salts;
- Figure 7 represents a chiral carboxylate-NHC-silver and carboxylate-NHC-palladium complexes according to an embodiment of the invention;
- Figure 8 represents the steric map view of the carboxylate-NHC-palladium;
- Figure 9 represents the synthesis of a chiral hydroxyl-alkyl-imidazol-2-ylidene gold complex;
- Figure 10 represents the catalytic activity (in asymmetric conjugate addition) of *in situ* formed metal alkylidene complexes according to an embodiment of the invention;
- Figure 11 represents the catalytic activity (in asymmetric allylic alkylation) of *in situ* formed metal alkylidene complexes according to another embodiment of the invention;
- Figure 12 represents the catalytic activity (in asymmetric allylic alkylation) of isolated metal alkylidene complexes in combination with a metallic salt according to an embodiment of the invention;
- Figure 13 represents the catalytic activity (in alpha-arylation of ketones) of isolated metal alkylidene and *in situ* formed complexes according to an embodiment of the invention.
- Figure 14 represents the catalytic activity (in Kumada cross-coupling) of *in situ* formed metal alkylidene complexes according to an embodiment of the invention.

The figures and the description hereinafter contain elements of definite nature. They do not only serve to explain the present invention, but also contribute to its definition, where appropriate.

The synthesis of a metal alkylidene complex according to the invention comprises a prior synthesis step of an unsymmetrical imidazolium salt of formula 1S: 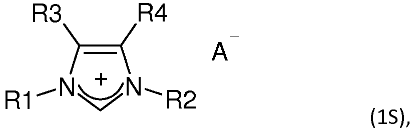 wherein R1 is an aromatic group,
R2 is selected from the group consisting of a cyclic secondary aliphatic alkyl and a C₂-C₁₀-heteroalkyl,
R3 and R4 are independently selected from one another from the group consisting of hydrogen, halide and an alkyl group, and
A⁻ is an anion.

The synthesis of this salt is carried out in one single operation that comprises the following two steps:
a. generating a reaction mixture by contacting one equivalent (1 eq) of an aniline of formula 2S : 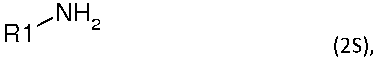 with one equivalent (1 eq) of a compound of formula 3S: 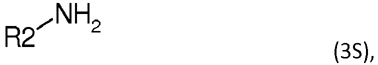 in the presence of at least four dot five equivalents (4.5 eq) of a Brønsted acid of formula 4S : 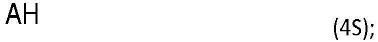
b. generating a solution comprising one equivalent (1 eq) of a dicarbonyl of formula 5S : 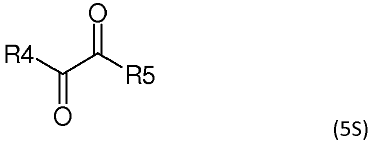 one equivalent (1 eq) of formaldehyde, and at least four dot five equivalents (4.5 eq) of the Brønsted acid of formula 4S, and heating said solution at about 80°C and then adding the reaction mixture generated at step a. ;
c. stirring for at least two hours at about 80°C; and
d. isolating the unsymmetrical imidazolium salt of formula 1S.

The above synthesis provides a 1,3-disubstituted imidazolium salt bearing an aromatic group on one hand and a cycloalkyl or heteroalkyl group on the other hand in one single chemical operation.

The Brønsted acid of formula 4S can, for example, be acetic acid. Acetic acid provides an acetate counterion A⁻.

The selectivity of the reaction to synthesize the 1,3-disubstituted imidazolium salt can reach a ratio of 1/30/1 in favor of the unsymmetrical imidazolium salt. More precisely, both reactions provide one part of a first symmetric imidazolium salt, one part of a second symmetric imidazolium salt, and 30 parts of an unsymmetrical imidazolium salt. In fact, the Applicant has discovered that, when an aromatic amine is contacted with an aliphatic amine in the above experimental conditions, their differences in reactivity minimize the generation of 1,3-bis-aryl imidazolium salts and 1,3-bis-alkyl imidazolium salts. Both aforementioned 1,3-bis-aryl and 1,3-bis-alkyl imidazolium salts are co-products of the reaction resulting from the autocondensation reaction of amines present in the reaction mixture.

In order to render the unsymmetrical imidazolium salts more stable (or even more reactive to metal complex precursors), it is advantageous to provide a counterion A⁻ chosen from the group consisting of a tetrafluoroborate anion, a hexafluorophosphate anion, a hexafluoroantimonate anion, a tetrakis[(3,5-trifluoromethyl)phenyl]borate anion, and a halide anion. Thus, it is advantageous to carry out an ion exchange.

In order to proceed to the ion exchange, the above steps a. to d. are followed by steps e. to g.:
e. adding one equivalent (1 eq) of an inorganic salt and an organic solvent, preferentially dichloromethane, to the unsymmetrical imidazolium salt as selected at step d;
f. stirring for at least one hour at room temperature and then proceeding to an organic solvent/water extraction followed by an evaporation of said organic solvent;
g. precipitation by a polar organic solvent, followed by the isolation of the unsymmetrical imidazolium salt.

The inorganic salt at step e. can be chosen from the group consisting of potassium tetrafluoroborate, sodium tetrafluoroborate, lithium tetrafluoroborate, hydrogen tetrafluoroborate, ammonium tetrafluoroborate, potassium hexafluorophosphate, sodium hexafluorophosphate, lithium hexafluorophosphate, hydrogen hexafluorophosphate, ammonium hexafluorophosphate, silver hexafluoroantimonate, potassium hexafluoroantimonate, potassium tetrakis[(3,5-tetrafluoromethyl)phenyl]borate, sodium tetrakis[(3,5-tetrafluoromethyl)phenyl]borate, and lithium tetrakis[(3,5-tetrafluoromethyl)phenyl]borate and halogen salts.

This provides an adequate counterion A⁻.

According to different embodiments of the present invention, R1 is chosen from the group consisting of 2,4,6-trimethylphenyl; 2,6-diisopropylphenyl; 2,6-dimethyl-4-hydroxyphenyl; and R2 is selected from the group consisting of cyclopentyl, cyclohexyl, cycloheptyl, cyclooctyl, cyclodecyl, cyclododecyl, cyclopentadecyl, isopinocampheyl, alkylcarboxylic acid, and alkylalcohol.

Choosing one among the aforementioned substituents provides good steric stability of the salt. As a consequence, choosing among the aforementioned substituents also provides a good steric stability of the metal complex of the invention.

When considering the example wherein R1 is 2,4,6-trimethylphenyl, R2 is cyclohexyl and R3 and R4 are both hydrogen, and by following the method described above, the Applicant obtained 1-aryl-3-cycloalkyl-imidazol-2-ylidene of formula 6S: 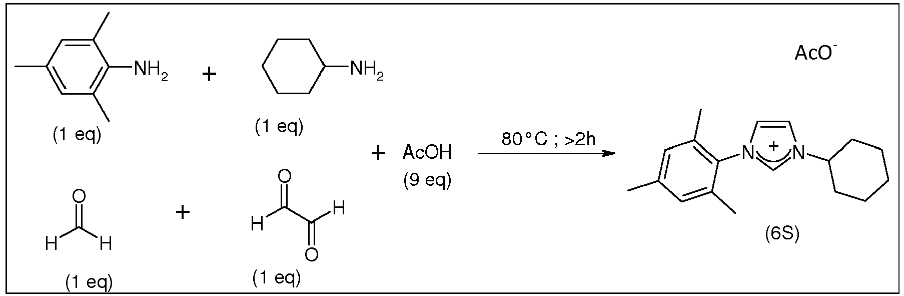 **Reaction scheme I: Synthesis of intermediate unsymmetrical imidazolium salt wherein R1 is 2,4,6-trimethylphenyl and R2 is cyclohexyl.**

To determine the selectivity of the reaction, the reaction mixture comprising said 1-aryl-3-cycloalkyl-imidazolin-2-ylidene of formula 6S is cooled down to room temperature. Then, water is added followed by solvent (ethyl acetate, for example, or dichloromethane). The aqueous layer is extracted (for example, three times) with the solvent. The organic layers are combined and dried on anionic salt (for example, on magnesium sulfate). Subsequently, the organic layer is vacuum concentrated. Nuclear magnetic resonance (NMR) analysis of the crude reaction product was used to investigate the selectivity of the reaction.

The exchange from the acetate anion against another anion in order to render the salt more stable and more reactive can be carried out as follows: the crude reaction product is dissolved in a solvent (for example, in dichloromethane). One equivalent of inorganic salt is added when the salt comprises the chosen counteranion (for example, potassium tetrafluoroborate in order to obtain a tetrafluoroborate counteranion). The mixture is then stirred at room temperature for several hours (for example, three hours). Then, a liquid/liquid extraction is carried out, for instance an organic solvent/water extraction. For this, water is added and then the organic layer is separated from the aqueous layer. The aqueous layer is washed (for example, three times) with solvent. Every organic layer is dried on an anionic salt (for example, on magnesium sulfate), and vacuum concentrated. Generally, a brown oil is obtained to which organic solvent is added in order to generate a precipitation (for example, ethyl acetate), then the reaction mixture can undergo an ultrasound treatment for a few minutes (for example, five minutes). A solid product is formed which can be filtered out and washed with solvent (for example, ethyl acetate) in order to provide the final product which is the unsymmetrical imidazolium salt in combination with the chosen counteranion (for example, a tetrafluoroborate anion).

Generally, the above-mentioned precipitation by a polar organic solvent can be carried out using ethyl acetate, diethyl-ether, or by using ethanol crystallization. Preferably, precipitation by ethyl acetate is used.

Using the above protocol that comprises only a single chemical operation, the Applicant has synthesized a great number of salts. Notably, the Applicant has synthesized the unsymmetrical imidazolium salts of formula 1a, 1b, 1e, 1g, 1f, 1i, 1d, and 1c (counterion in the following examples is choosen among Cl⁻ and BF4⁻) :

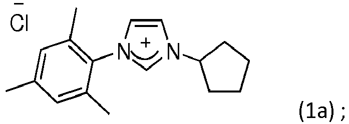

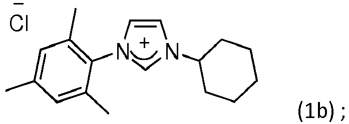

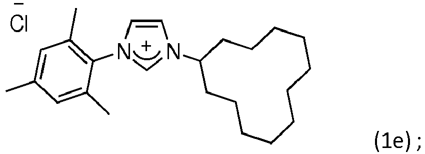

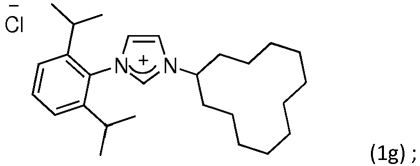

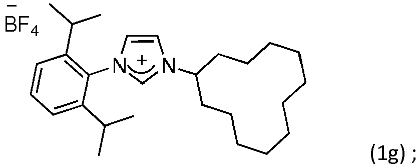

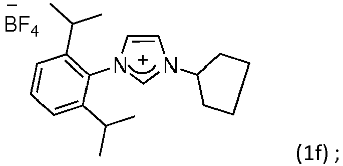

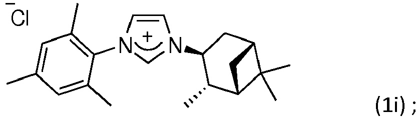

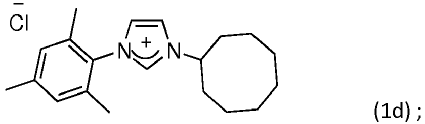

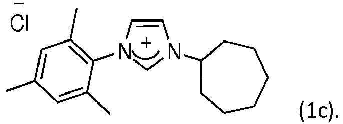

Generally speaking, the Applicant has synthesized unsymmetrical imidazolium salts of formula 1S: 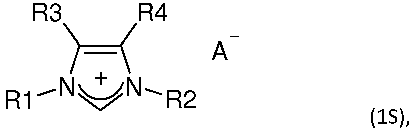 wherein R1 is an aromatic group, R2 is selected from the group consisting of a cyclic secondary aliphatic alkyl and a C₂-C₁₀-heteroalkyl, R3 and R4 are independently from each other selected from the group consisting of hydrogen, halide and an alkyl group, and A⁻ is an anion.

According to different embodiments of the invention, R1 can be 2,4,6-trimethylphenyl, 2,6-diisopropylphenyl; 2,6-dimethyl-4-hydroxyphenyl.

According to different embodiments, R2 can be cyclopentyl, cyclohexyl, cycloheptyl, cyclooctyl, cyclodecyl, cyclododecyl, cyclopentadecyl or isopinocampheyl, alkylcarboxylic acid, alkylalcohol.

According to different embodiments, R3 and R4 can each be hydrogen or halides (for example, chlorine atoms or alkyl halides). In other embodiments, R3 and R4 can be alkyl groups (for example, methyl, ethyl, propyl, or isopropyl).

According to different embodiments of the invention, the anion A⁻ can be selected from the group consisting of a tetrafluoroborate anion, a hexafluorophosphate anion, an acetate anion, a hexafluoroantimonate anion, a tetrakis[(3,5-trifluoromethyl)phenyl]borate anion, and a halide anion.

Once the unsymmetrical imidazolium salts of formula 1S are synthesized, the metal complexes of the invention can be synthesized. Indeed, the cation of the unsymmetrical imidazolium salt forms the ligand of the metal complexes. The ligand of the diaminocarbenic metallic complex of the invention is one of the NHC salts described herein.

The synthesis of metal alkylidene complexes according to the invention is described below in SYNTHESIS OF METAL ALKYLIDENE COMPLEXES OF THE INVENTION.

An isolated state of the art document Ren et al., Journal of Organometallic Chemistry, 2007, 692, 2092-2098 discloses *ortho*-hydroxyaryl-substituted *N*-heterocyclic carbene ligands and corresponding palladium complexes. However, this work shows that the palladium complexes are restricted to limited species since it must be synthesized exclusively from 4-bromo-2,4,6-tri-*tert*-butyl-2,5-cyclohexadien-1-one. Hence, the palladium complex described therein is limited to a single species that is necessarily bearing a ligand comprising an *ortho*-hydroxyaryl group.

As a consequence the Applicant specifically excludes these complex species from the present application. Namely, according to an embodiment of the invention when the metal (represented by M in formula I) of the metal alkylidene complex of the invention is palladium (Pd) and when the cyclic secondary aliphatic alkyl (R2 group in formula I) is cyclohexyl, then the aryl group of the 1-aryl-3-alkyl-imidazol-2-ylidene ligand (R1 group in formula I) is other than an *ortho*-hydroxyaryl group.

Further it shall be noted that in the present description and appending claims the term "aromatic" refers to an aromatic ring having only carbon atoms as core (optionally substituted by alkyl and/or functional groups). Consequently the term "aromatic" is different from the term "heteroaromatic" that refers to a heterocyclic aromatic ring that comprises one or more heteroatoms other than carbon atoms in the core (pyrimidine, indole, etc.), and "heteroaromatic" is not in the scope of "aromatic" according to the present invention. Further, in the present description the term "heteroalkyl" refers specifically to an alkyl group comprising heteroatoms in their carbon main chain or being subsituted by heteroatoms or functional groups (such as O, N, OH, NH₂, COOH etc.). However, "heteroalkyl" is generally to be considered as a subgroup of an "alkyl" group. In other words, an "alkyl" group can be a "heteroalkyl".

### A. SYNTHESIS OF METAL ALKYLIDENE COMPLEXES OF THE INVENTION

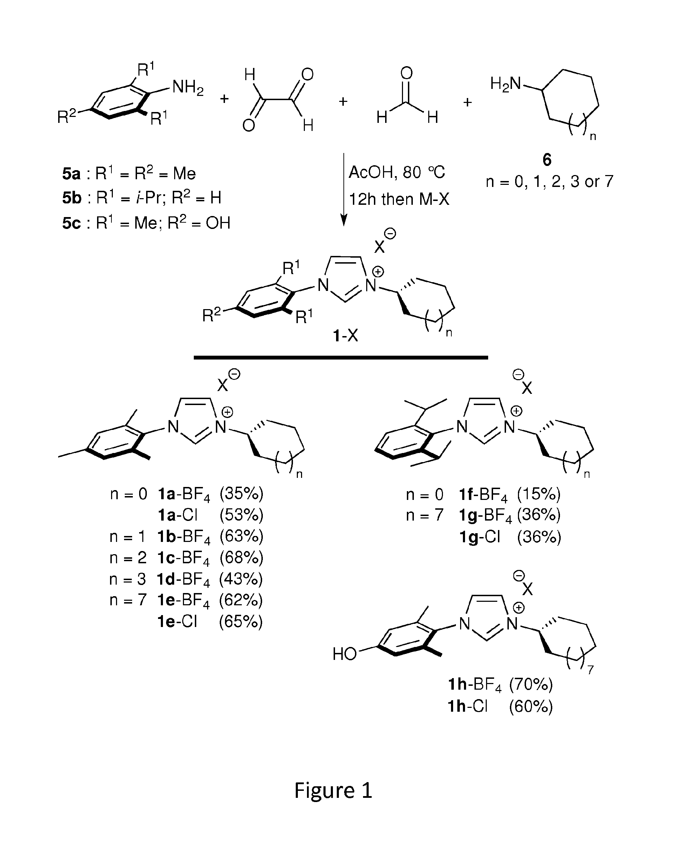

Figure 1 shows the synthesis of 1-aryl-3-cycloalkyl-imidazolium salts of formula **1-X (X** being chosen counter-ion). Selectivity was determined by ¹H NMR spectroscopy on the crude mixture before any treatment. Experimental details are shown below in the *EXPERIMENTAL SECTION.*

The Applicant synthesized 1-mesityl-3-cycloalkyl-imidazolium salts of formula **1** with 95% of selectivity by mixing an aromatic amine of formula **5 (5a** to **5c)**, cycloalkylamine of formula **6,** glyoxal and formaldehyde in presence of acetic acid at 80°C. After treatment with KBF₄ or NaCl (details are shown below), imidazolium salts of formula **1a** to **1h** were isolated by precipitation in EtOAc up to 70% of yield. Figure 1 shows that this protocol can be used for several cycloalkylamines and anilines, including the sterically-demanding 2,6-diisopropylphenyl moiety.

Figure 1 shows that the yields ranged from 15% to 70%, depending of the steric hindrance of the aromatic amines (commonly known as anilines). Selectivity is generally good for all cases (up to >99% for the compound of formula **1h).** This process is scalable to multi-grams without alteration of the yield (up to 60 g for the compound of formula **1e).**

The salts of figure 1 were characterized and confirmed by X-ray diffraction of single-crystals.

Starting from the salts shown in figure 1, the Applicant generated corresponding transition-metal NHC complexes.

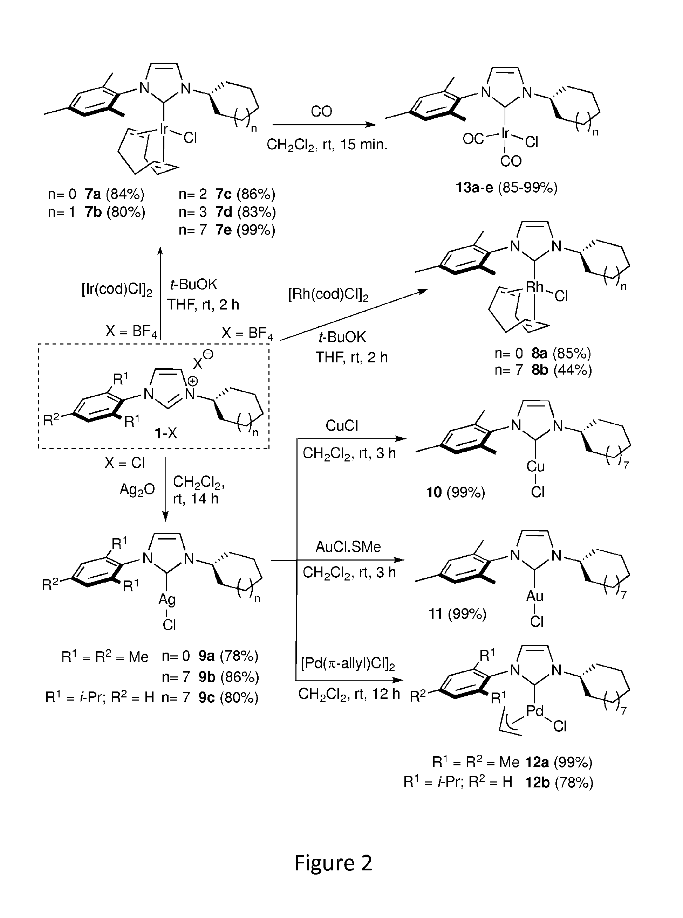

Figure 2 shows the synthesis of 1-aryl-3-cycloalkyl-imidazol-2-ylidene transition-metal complexes. Experimental details are shown below in the *EXPERIMENTAL SECTION.*

Figure 2 shows the synthesis of Ir and Rh metal complexes using the deprotonation of tetrafluoroborate salts of formula **1-X** with t-BuOK in presence of [Ir(cod)Cl]₂ or [Rh(cod)Cl]₂ ; "(cod)" stands for cyclooctadiene. This leads to NHC metal complexes of formula **7 (7a** to **7e)** and of formula **8 (8a** and **8b)** in yields ranging from 44% to 99%.

Figure 2 further shows the synthesis of Ag metal complexes (silver-complexes of formula **9a, 9b** and **9c)** in yields ranging from 78% to 86%. For this, imidazolium chloride salts of formula **1a, 1e** and **1g** (shown in figure 1) were treated with silver oxide Ag₂O.

Figure 2 also shows a transmetallation process involving the above mentioned silver-complexes. Copper (Cu), gold (Au) and palladium (Pd) salts were used to synthesize the corresponding NHC metal complexes of formula **10, 11, 12a** and **12b** in yields up to 99%.

The metal complexes of figure 2 were characterized and confirmed by single-crystal X-ray diffraction.

Using the above protocol, the Applicant was able to synthesize various metal alkylidene complexes according to the invention. This confirms the flexibility of the invention's chemical protocol.

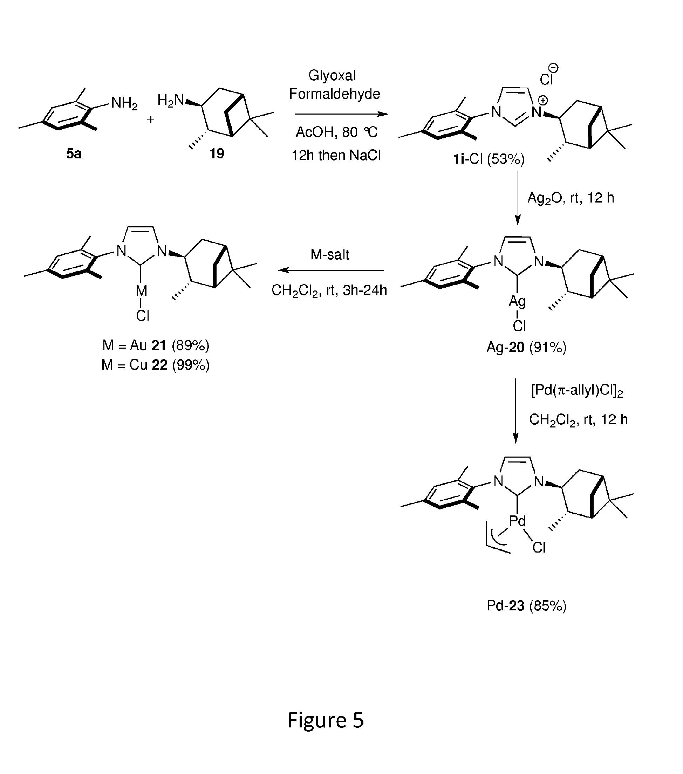

Figure 5 shows the synthesis of chiral unsymmetrical unsaturated NHC metal complexes according to the invention. The chiral imidazolium salt of formula **1i** was synthesized in 53% of yield from (+)-isopinocampheylamine of formula **19.** The silver complex of formula **20** was then isolated with a yield of 91% and converted to copper (yield: 99%), gold (yield: 89%) and palladium (yield: 85%) complexes of formula **21, 22** and **23** respectively.

The metal complexes of figure 5 were characterized and confirmed by single-crystal X-ray diffraction. Experimental details are shown below in the *EXPERIMENTAL SECTION.*

Further, the Applicant used the above protocol to extend the chemical protocol to the synthesis of chiral unsymmetrical hydroxyalkyl- and carboxyalkyl-functionalized imidazolium salts starting from enantiopure β-aminoalcohols or α-aminoacids.

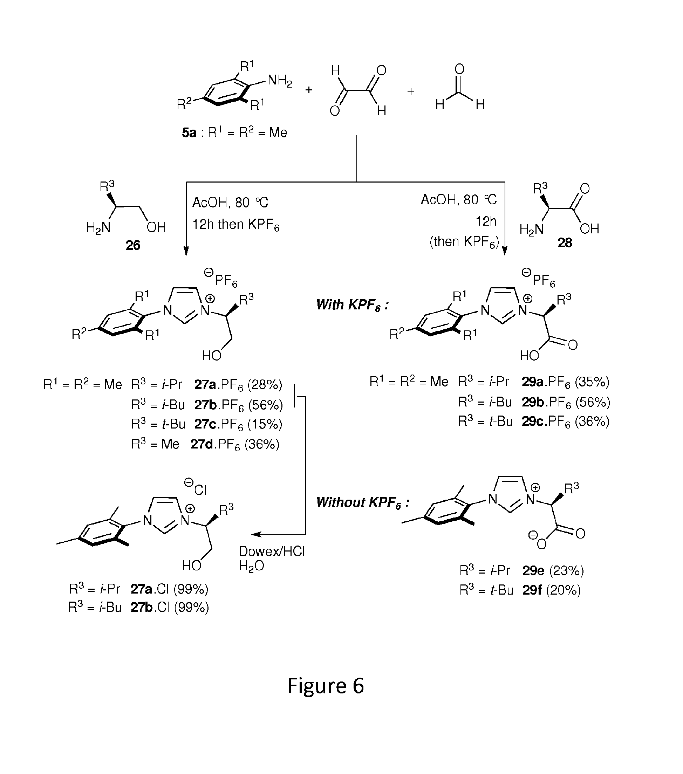

Figure 6 shows the synthesis by a single chemical operation of the invention of chiral hydroxyalkyl-imidazolium salts and carboxyalkyl-imidazolium salts. Selectivity was determined by ¹H NMR spectroscopy on the crude mixture before treatment. Experimental details are shown below in the *EXPERIMENTAL SECTION.*

Figure 6 shows that using the above protocol in the presence of enantioenriched β-aminoalcohols **26** or α-aminoacids **28,** enable synthesizing respectively chiral hydroxyalkyl-imidazolium salts of formula **27a, 27b, 27c,** and **27d** and carboxyalkyl-imidazolium salts **29a, 29b, 29c, 29e,** and **29f** with yields ranging from 15% to 56%, depending of the steric hindrance of chiral-amines.

The salts were characterised and confirmed by X-ray diffraction of single-crystals.

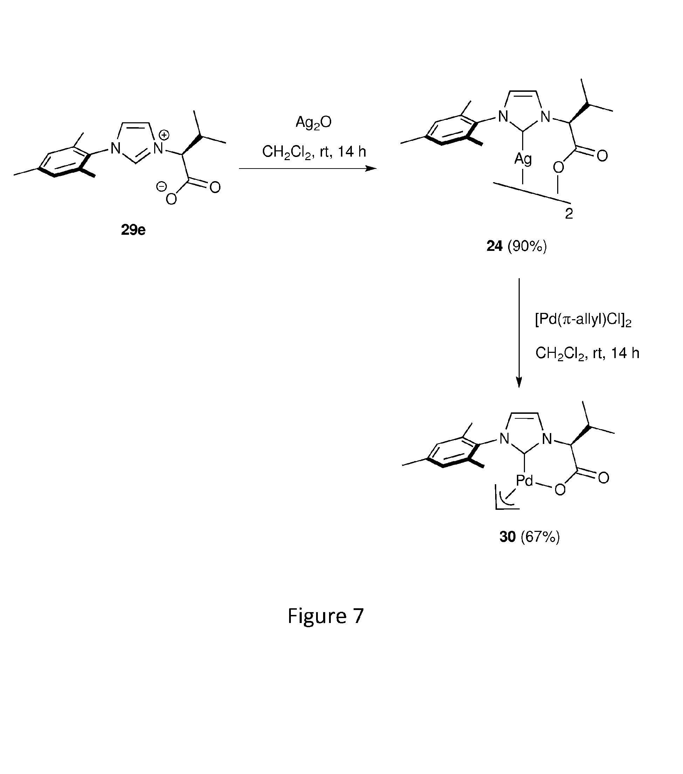

Figure 7 shows a chiral carboxylate-NHC-palladium complex of formula **30** that was isolated with a yield of 67% from zwiterrion **29e** shown in figure 6. This new Pd-complex was characterised by X-ray diffraction of a single-crystal. Experimental details are shown below in the *EXPERIMENTAL SECTION.*

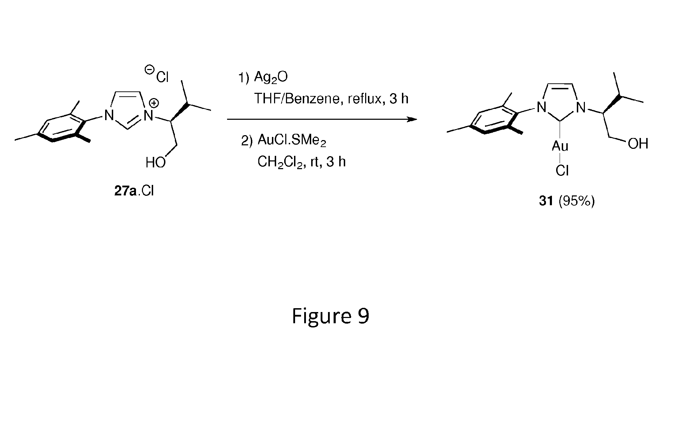

Figure 9 shows the synthesis of a chiral hydroxyl-alkyl-imidazol-2-ylidene gold complex of formula **31.** This new Au-complex was characterised by X-ray diffraction of a single-crystal. The hydroxylalkyl-imidazolium of formula **27a** led to the gold-complex of formula **31** in the yield of 95%. It was confirmed by the X-ray (single crystal) that the hydroxyl function was not chelated to the metal center.

The electronic and steric properties of chosen unsymmetrical unsaturated NHC metal complexes of the invention were investigated.

In order to measure the electron-donnor ability of the unsymmetrical unsaturated NHC metal complexes of the invention, [IrCl(CO)₂NHC] complexes **13a** to **13e** were synthesized from complexes **7a** to **7e** as shown in figure 2.

The corresponding Tolman Electronic Parameters (TEP) were then calculated (see C. A. Tolman, Chem. Rev., 1997, 77, 313). Measurement of the TEP parameters was done based on the correlation values from Ir-complexes to Ni-complexes as described in T. Dröge, F. Glorius, Angew. Chem. Int. Ed., 2010, 49, 6940 and R. A. Kelly III, H. Clavier, S. Guidice, N. M. Scott, E. D. Stevens, J. Bordner, I. Samardjiev, C. D. Hoff, L. Cavallo, S. P. Nolan, Organometallics, 2008, 27, 202.

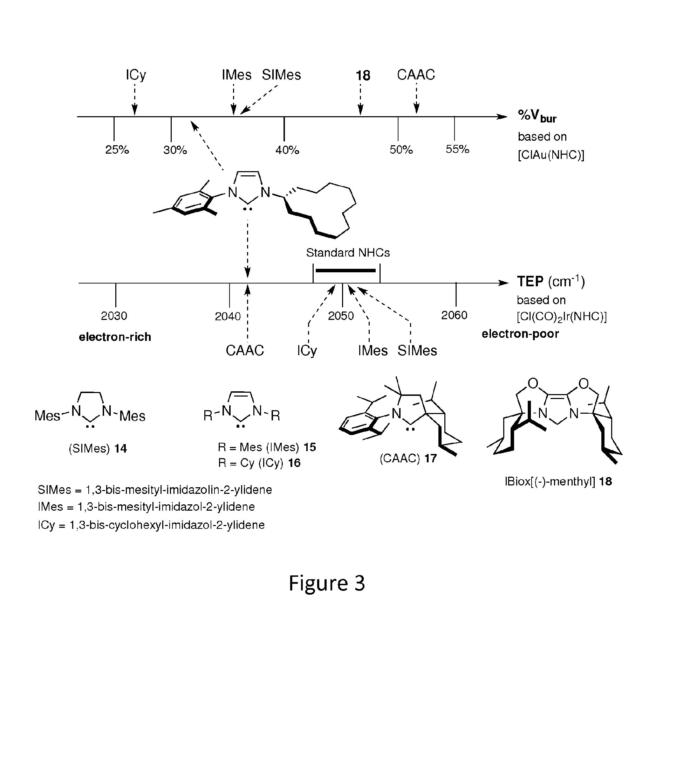

Figure 3 shows Electronic and steric properties of unsymmetrical 1-mesityl-3-cyclododecyl-imidazol-2-ylidene resulting from 1-mesityl-3-cycloalkyl-imidazolium salt **1e** (TEP = Tolman Electronic Parameters; %V_{bur} = percentage of buried volume).

Figure 3 shows that 1-mesityl-3-cycloalkyl-imidazol-2-ylidene NHCs have a strong electron richness (TEP ranged from 2042.1 to 2043.8 cm⁻¹) in comparison with standard symmetrical NHCs **14** (SIMes), **15**(IMes) and **16** (ICy) (2050.7 to 2051.5 cm⁻¹). In fact, Figure 3 shows that the 1-mesityl-3-cycloalkyl-imidazol-2-ylidene NHCs of the invention have a TEP close to the unsymmetrical Bertrand's Cyclic(Alkyl)(Amino)Carbene (CAAC) ligand of formula **17** (2042.2 cm⁻¹) (see V. Lavallo, Y. Canac, C. Präsang, B. Donnadieu, G. Bertrand, Angew. Chem. Int. Ed., 2005, 44, 5705; G. D. Frey, R. D. Dewhurst, S. Kousar, B. Donnadieu, G. Bertrand, J. Organomet. Chem., 2008, 693, 1674).

Regarding the steric properties of the NHCs of the invention, percent buried volumes (%V_{bur}) (see H. Clavier, S. P. Nolan, Chem. Commun., 2010, 46, 841) were calculated with 1-mesityl-3-cyclododecyl-imidazol-2-ylidene metal complexes of formula **9b, 10** and **11** shown in figure 2 (34.5%; 33.9% and 31.7% respectively). Despite the presence of the large cycloalkyl group, the steric hindrance appeared less pronounced than their symmetrical homolog IMes of formula **15** (36.5%) and was very far to the CAAC of formula **17** (51.2%).

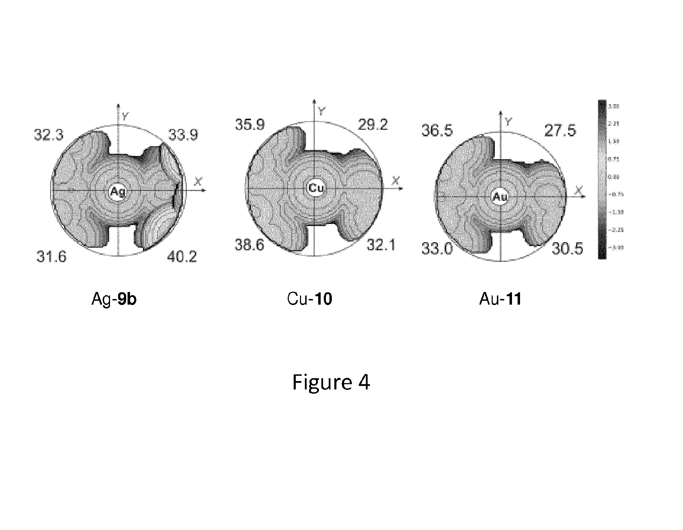

Figure 4 shows the steric map views of 1-mesityl-3-cyclododecyl-imidazol-2-ylidene metal complexes of the invention of formula **9b, 10** and **11** (see F. Ragone, A. Poater, L. Cavallo, J. Am. Chem. Soc., 2010, 132, 4249).

Figure 4 outlines the unsymmetrical environment around the metal. Therefore, unsymmetrical 1-aryl-3-cycloalkyl-imidazol-2-ylidene NHCs are able to combine strong electron-donnor abilities and low steric hindrance, in opposition to CAAC of formula **17** or IBiox[(-)menthyl] of formula **18** show in figure 3, which both show a much higher bulkiness (G. D. Frey, R. D. Dewhurst, S. Kousar, B. Donnadieu, G. Bertrand, J. Organomet. Chem., 2008, 693, 1674; G. Altenhoff, S. Würtz, F. Glorius, Tetrahedron Lett., 2006, 47, 2925).

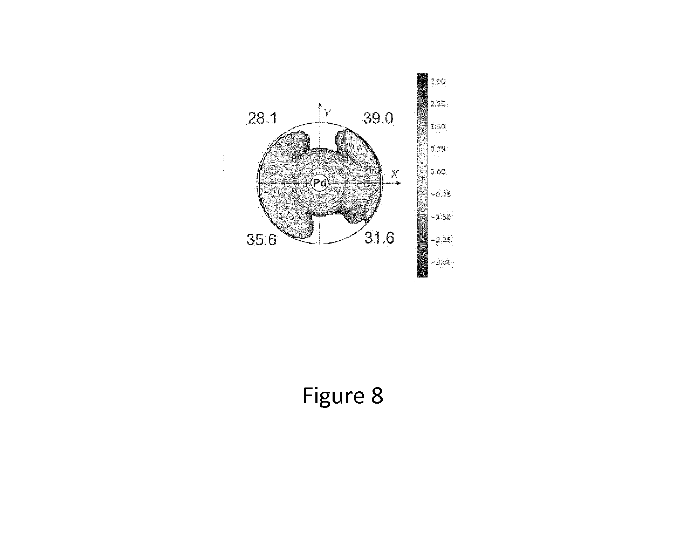

Figure 8 shows the steric map view of carboxylate-NHC-palladium complex of formula **30.**

Metal alkylidene complexes according to the invention were tested in chemical reactions. The complexes show strong catalytic activity.

Salts of the invention of formula **27a, 27b, 27c, 29c** and **29e** were used in combination with copper triflate (I) to form an *in situ* metal alkylidene complex according to the invention and to catalyze chemical reactions of the type asymmetric conjugate additions and allylic alkylations. Experimental details are shown below in the *EXPERIMENTAL SECTION.*

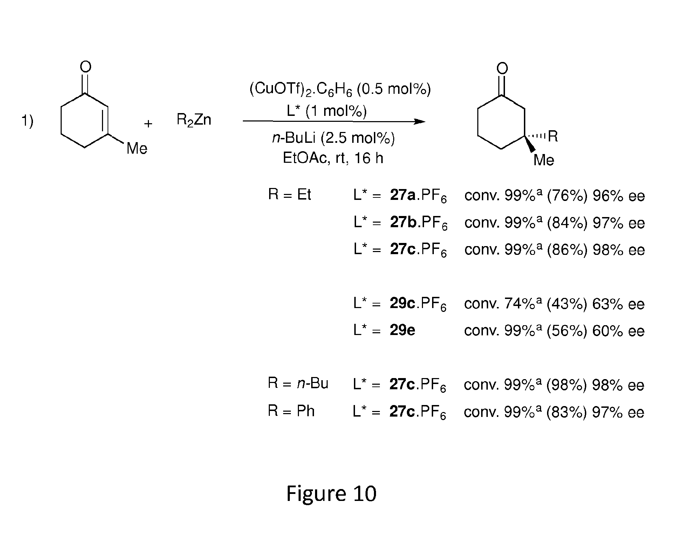

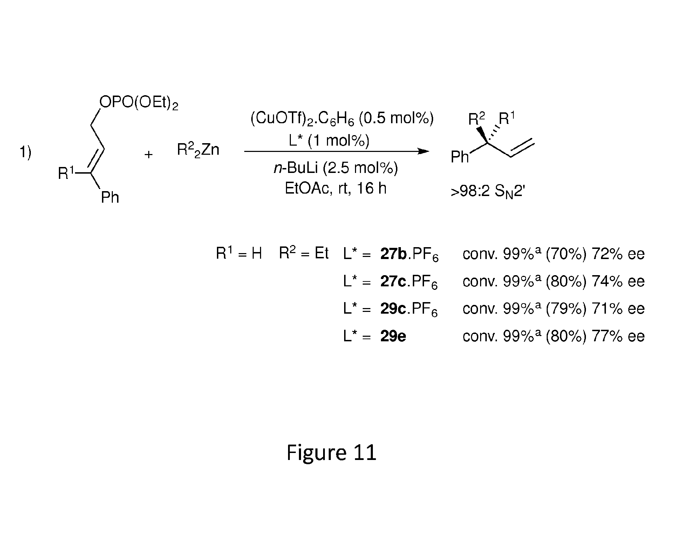

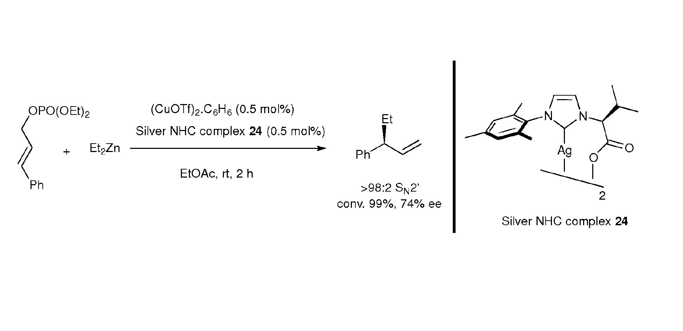

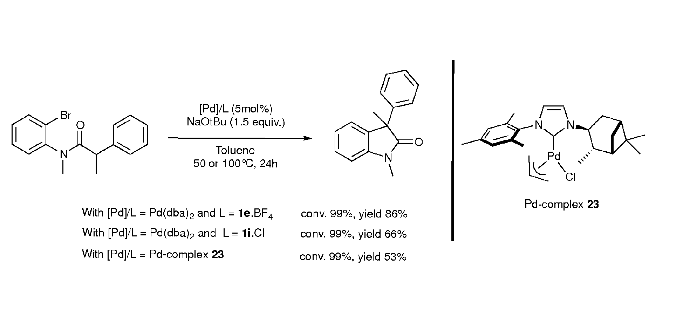

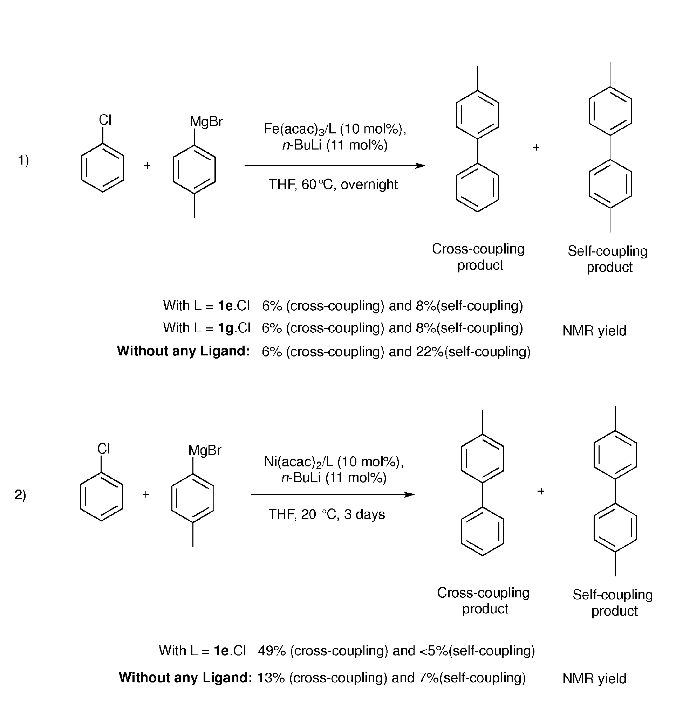

Figure 10 shows the catalysis of an asymmetric conjugate addition and figure 11 shows the catalysis of asymmetric allylic alkylation. Both figure 10 and figure 11 show that the catalytic activity is confirmed by valuable building blocks in high yields up to 98% ee.

Further, the catalytic activity of isolated metal alkylidene complexes in combination with a metallic salt was confirmed. Experimental details are shown below in the *EXPERIMENTAL SECTION.* Figure 12 shows an isolated metal alkylidene complex **24** (silver NHC complex) in combination with copper triflate (I). The catalytic activity is confirmed by successful asymmetric allylic alkylation in high yields. The isolated metal alkylidene complex **24** undergoes a metal exchange with copper.

The catalytic activity of an isolated metal alkylidene complex according to another embodiment of the invention was confirmed for alpha-arylation of ketones. Experimental details are shown below in the *EXPERIMENTAL SECTION.*

Figure 13 shows catalytic activity of palladium alkylidene complex **23** and complexes respectively generated with salts **1e** and **1i.** The catalytic activity was validated in alpha-arylation reaction of ketone. The catalytic activity is confirmed by successful reaction in high yields.

Furthermore, salts of the invention of formula **1e, 1g** were mixed with Fe(acac)₃ or Ni(acac)₂ to form respectively an iron *in situ* metal alkylidene complex according to the invention and a nickel *in situ* metal alkylidene complex according to the invention. The catalytic activity of the *in situ* formed metal alkylidene complexes was confirmed with cross-coupling reaction. Experimental details are shown below in the *EXPERIMENTAL SECTION*

Figure 14 shows the catalysis of Kumada cross-coupling of both iron and nickel metal alkylidene complex according to the invention.

The metal alkylidene complexes according to the invention prove to be powerful catalysts in a chemical cross-coupling reactions. Examples of such cross-coupling reactions are conjugate addition reaction, allylic alkylation reaction, ketone arylation reaction or Kumada reaction.

Further, the above examples show that the metal alkylidene complexes according to the invention can be used as precursor reagents to generate *in situ* metal alkylidene complexes according to the invention.

Apart from tris(acetylacetonate)iron(III) [Fe(acac)₃] or nickel(II)acetylacetonate [Ni(acac)₂], magnesium (Mg) acetylacetonate or zinc (Zn) acetylacetonate can be used to form respectively *in situ* Mg and Zn alkylidene complexes according to the invention.

Furthermore, titan (Ti) and platin (Pt) based metal alkylidene complexes can be prepared according to the invention.

### B. EXPERIMENTAL SECTION

### B.1. General Procedures and Materials

All the reactions were carried out under inert atmosphere (argon). Dichloromethane was dried over calcium hydride overnight, then distilled and degassed. Toluene and THF were distilled over sodium/benzophenone and degassed prior to use. All commercial chemicals were used as received unless otherwise noted. ¹H (400 MHz), ¹¹B (128 MHz), ¹³C (100 MHz), ¹⁹F (376 MHz), ³¹P (162 MHz) NMR spectra were recorded on a Bruker ARX400 spectrometer with complete proton decoupling for nucleus other than ¹H. ¹H and ¹³C chemical shifts are reported in parts per million with the solvent resonance as the internal standard (CDCl₃, ¹H: δ 7.26 ppm, ¹³C: δ 77.16 ppm; ¹¹B chemical shifts are reported in parts per millions with BF₃.Et₂O (6 = 0.0 ppm) as the internal standard; ¹⁹F chemical shifts are reported in parts per millions with CFCl₃ (δ = 0.0 ppm) as the internal standard; ³¹P chemical shifts are reported in parts per millions with 85% H₃PO₄ (δ = 0.0 ppm) as the internal standard. Coupling constants are reported in Hertz (Hz). Abbreviations are used as follows: s = singlet, d = doublet, t = triplet, q = quadruplet, qi = quintet, sep = septet, m = multiplet, br = broad. High resolution mass spectroscopy analyses were performed at the Centre Régional de Mesures Physiques de l'Ouest (CRMPO), Université de Rennes 1. Melting points were measured on a Stuart Melting Point Apparatus SMP3 and are uncorrected. Optical rotations were recorded on a Perkin Elmer 341 polarimeter.

### B.2. Imidazolium salts

**B.2.1. General procedure for imidazolium chloride salts.** Imidazolium chloride salts were prepared with slight modification of the previously reported procedure for the preparation of imidazolium tetrafluoroborate salts. After completion of the reaction, the crude mixture was dissolved in dichloromethane, then the organic layer was washed three times with brine. The organic layer was dried over magnesium sulfate, filtered, then the solvents were evaporated under reduced pressure and the crude mixture was analysed by ¹H NMR to determine the selectivity. The crude mixture was precipitated with ethyl acetate, then filtered to isolate the desired compound as a pale white solid.

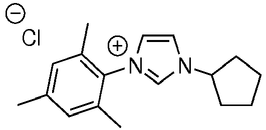

**B.2.1.1. 3-cyclopentyl-1-mesityl-imidazolium chloride** was prepared from cyclopentylamine (0.99 mL, 10.0 mmol), 2,4,6-trimethylaniline (1.41 mL, 10.0 mmol), glyoxal (1.14 mL, 10.0 mmol, 40 % weight in aqueous solution), formaldehyde (0.74 mL, 10.0 mmol, 37 % weight in aqueous solution) and acetic acid (5.1 mL, 90.0 mmol) at 80°C for 5 minutes. The desired chloride salt was obtained as a pale white solid (1.53 g, 53 %, mp = 169°C). 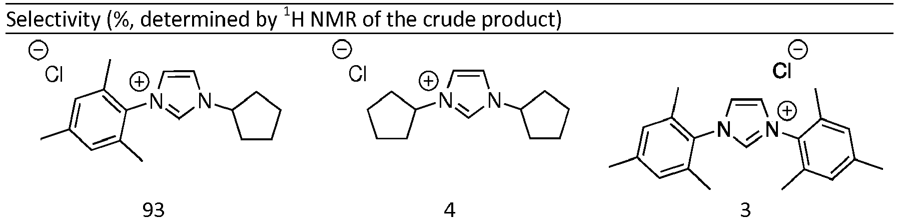 ¹H-NMR (400 MHz, CDCl₃): δ 10.36 (s, 1H), 7.94 (br. s, 1H), 7.20 (br. s, 1H), 6.83 (s, 2H), 5.34-5.28 (m, 1H), 2.55 (s, 1H), 2.31-2.28 (m, 2H), 2.18 (s, 3H), 1.91 (s, 6H), 1.88-1.79 (m, 4H), 1.65-1.62 (m, 2H). ¹³C{¹H}-NMR (400 MHz, CDCl₃): δ 140.6, 137.3, 133.9, 130.6, 129.4, 123.6, 121.0, 61.2, 33.4, 23.4, 20.7, 17.3.

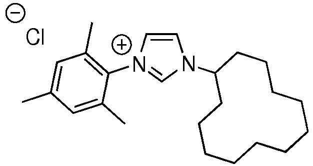

**B.2.1.2. 3-cyclododecyl-1-mesityl-imidazolium chloride** was prepared from cyclododecylamine (1.83 g, 10.0 mmol), 2,4,6-trimethylaniline (1.41 mL, 10.0 mmol), glyoxal (1.14 mL, 10.0 mmol, 40 % weight in aqueous solution), formaldehyde (0.74 mL, 10.0 mmol, 37 % weight in aqueous solution) and acetic acid (5.1 mL, 90.0 mmol) at 80°C for 5 minutes. The desired chloride salt was obtained as a pale white solid (2.51 g, 65 %, mp = 258°C). 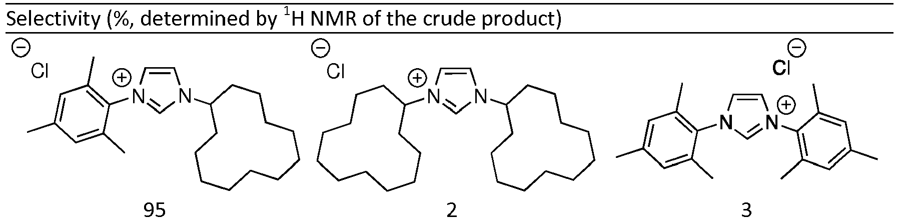 ¹H-NMR (400 MHz, CDCl₃): δ 10.69 (s, 1H), 7.92 (t, ³*J*_{H-H} = 2.0 Hz, 1H), 7.24 (s, ³*J*_{H-H} = 2.0 Hz, 1H), 6.82 (s, 2H), 5.01-4.98 (m, 1H), 2.17 (s, 3H), 2.12-2.07 (m, 2H), 1.91 (s, 6H), 1.44-1.14 (m, 18H). ¹³C{¹H}-NMR (400 MHz, CDCl₃): δ 140.4, 137.6, 133.7, 130.6, 129.3, 123.3, 121.3, 58.5, 30.1, 23.4, 23.2, 22.9, 21.0, 20.7, 17.2.

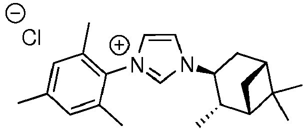

**B.2.1.3. 3-(*1R,2S,3S,5R*)-isopinocampheyl-1-mesitylimidazolium chloride** was prepared from (*1S,2S,3S,5R*)-(+)-isopinocampheylamine (307 mg, 2.0 mmol), 2,4,6-trimethylaniline (0.28 mL, 2.0 mmol), gloxal (0.23 mL, 2.0 mmol, 40 % wt in aqueous solution), formaldehyde (0.15 mL, 2.0 mmol, 37 % wt in aqueous solution) and acetic acid (1.03 mL, 18.0 mmol). The desired compound was obtained as a pale white solid (384 mg, 53 %, mp = 265°C). 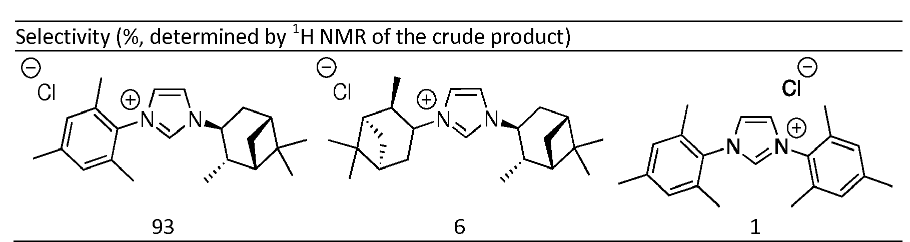 ¹H-NMR (400 MHz, CDCl₃) δ 11.19-11.17 (m, 1H), 7.69-7.66 (m, 1H), 7.26-7.24 (m, 1H), 6.97 (s, 2H), 5.97-5.88 (m, 1H), 3.05-2.95 (m, 1H), 2.66-2.56 (m, 1H), 2.32 (s, 3H), 2.32-2.23 (m, 1H), 2.15-2.10 (m, 1H), 2.10 (s, 3H), 2.05 (s, 3H), 2.02-1.94 (m, 2H), 1.90 (br. s, 1H), 1.28 (s, 3H), 1.21 (d, ³*J*_{H-H} = 6.8 Hz, 3H), 1.20 (s, 3H), 1.15-1.11 (m, 1H). ¹³C{¹H}-NMR (100 MHz, CDCl₃) δ 141.2, 139.8, 134.4, 134.1, 131.0, 130.0, 129.9, 124.1, 119.8, 59.5, 47.6, 45.6, 41.6, 39.2, 36.6, 35.7, 28.2, 23.6, 21.2, 20.0, 17.9, 17.6. HRMS calcd for C₂₂H₃₁N₂⁺ [M-Cl]⁺: m/z 323.8487, found: m/z 323.8485 (1 ppm). [a]²⁰_{D} = + 20.0 (c = 1.00 (CHCl₃)).

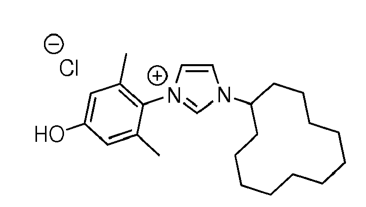

**B.2.1.4. 3-cyclododecyl-1-(3,5-dimethylphenol)imidazolium chloride** was prepared from cyclododecylamine (367 mg, 2.0 mmol), 4-hydroxy-2,6-dimethylaniline (274 g, 2.0 mmol), gloxal (0.23 mL, 2.0 mmol, 40 % wt in aqueous solution), formaldehyde (0.15 mL, 2.0 mmol, 37 % wt in aqueous solution) and acetic acid (1.03 mL, 18.0 mmol). The desired chloride salt was obtained as a pale white solid (472 g, 60 %, mp = 257°C).

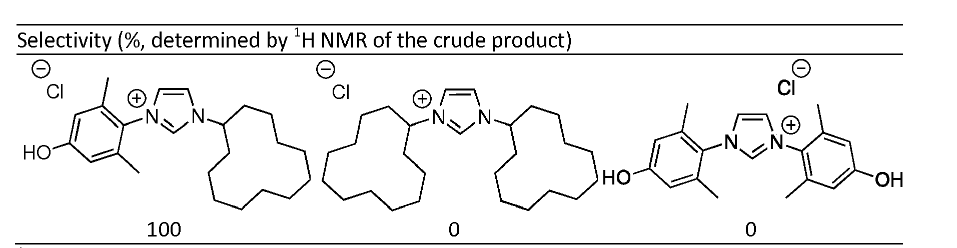

¹H-NMR (400 MHz, CDCl₃/CD₃OD): δ 9.73 (s, 1H), 7.63-7.61 (m, 1H), 7.31-7.29 (m, 1H), 6.58 (s, 2H), 4.86-4.77 (m, 1H), 2.20-2.08 (m, 2H), 1.90-1.78 (m, 2H), 1.88 (s, 6H), 1.53-1.24 (m, 18H). ¹³C{¹H}-NMR (400 MHz, CDCl₃/CD₃OD): δ 158.9, 137.1, 135.4, 124.7, 124.5, 124.4, 121.0, 115.6, 59.2, 30.3, 23.8, 23.7, 23.2, 23.2, 21.2, 17.4. HRMS calcd for C₂₃H₃₅N₂O⁺ [M-BF₄]⁺: m/z 355.2749, found: m/z 355.2747 (1 ppm).

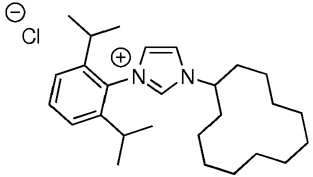

**B.2.1.5. 3-cyclododecyl-1-di*iso*propylphenyl-imidazolium chloride** was prepared from cyclododecylamine (7.15 g, 40.0 mmol), 2,6-di*iso*propylaniline (7.07 g, 40.0 mmol), glyoxal (4.6 mL, 40.0 mmol, 40 % weight in aqueous solution), formaldehyde (3.2 mL, 40.0 mmol, 37 % weight in aqueous solution) and acetic acid (20.6 mL, 360.0 mmol) at 100°C for 5 minutes. The residual biscyclododecylimidazolium chloride was removed by precipitation in ethyl acetate/diethyl ether, then the residual cyclododecylammonium chloride was removed by precipitation in diethyl ether. The desired imidazolium chloride salt was isolated as a pale white solid (6.21 g, 36 % yield, mp = 88°C) after flash chromatography on silica gel (gradient: diethyl ether, then ethyl acetate, then ethanol). 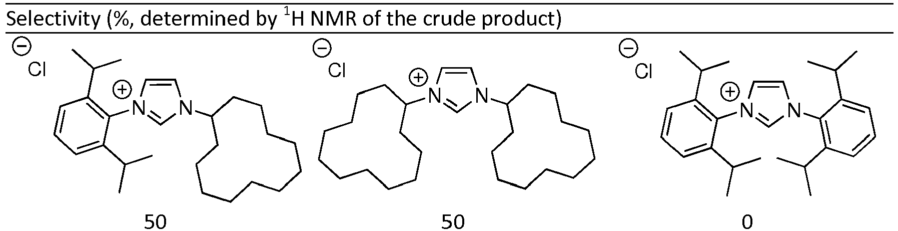 ¹H-NMR (400 MHz, CDCl₃): δ 10.45 (m, 1H), 8.11 (t, ³*J*_{H-H} = 1.6 Hz, 1H), 7.42 (t, ³*J*_{H-H} = 8.0 Hz, 1H), 7.24 (t, ³*J*_{H-H} = 2.0 Hz, 1H), 7.20 (s, 1H), 7.18 (s, 1H), 5.28-5.12 (m, 1H), 2.41-2.10 (m, 4H), 1.86-1.78 (m, 2H), 1.50-1.27 (m, 18H), 1.11 (d, ³*J*_{H-H} = 6.8 Hz, 6H), 1.06 (d, ³*J*_{H-H} = 6.8 Hz, 6H). ¹³C-NMR (100 MHz, CDCl₃): 145.3, 137.9, 131.6, 130.4, 124.5, 121.9, 59.0, 30.2, 28.7, 24.4, 23.9, 23.7, 23.2, 21.1.

**B.2.2. General procedure for imidazolium hexafluorophosphate salts.** Imidazolium hexafluorophosphate salts were prepared with slight modification of the previously reported procedure for the preparation of imidazolium tetrafluoroborate salts. After completion of the reaction, the volatiles were removed under reduced pressure and the crude mixture was analysed by ¹H NMR to determine the selectivity. The crude mixture was then dissolved in diethyl ether/brine (1/1) and the aqueous layer was thereafter washed three times with diethyl ether. Potassium hexafluorophosphonate (1 equiv.) and dichloromethane were added to the aqueous layer and the mixture was stirred at room temperature for 1 h. The organic layer was separated, dried over magnesium sulfate, filtered and the solvents were removed under reduced pressure. The desired imidazolium hexafluorophosphonate salts were isolated by flash chromatography on silica gel (dichloromethane/ethyl acetate 9/1 for the alcohols and dichloromethane/ethanol 9/1 for the carboxylic acid).

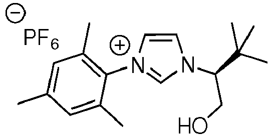

**B.2.2.1. 3-((*S*)-2*N*-3,3-dimethylbutanol)-1-mesityl-imidazolium chloride** was prepared from 2,4,6-trimethylaniline (0.28 mL, 2.00 mmol), (*R*)-*tert*-leucinol (234 mg, 2.00 mmol), glyoxal (0.23 mL, 2.00 mmol, 40 % weight in aqueous solution), formaldehyde (0.15 mL, 2.00 mmol, 37 % weight in aqueous solution) and acetic acid (1.03 mL, 18.0 mmol) at 60°C for 5 minutes, then potassium hexafluorophosphonate (368 mg, 2.0 mmol). The desired hexafluorophosphonate salt was obtained as a pale white solid (128 mg, 15 %). 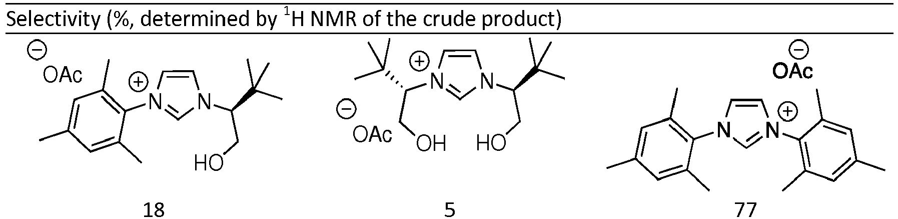 ¹H-NMR (400 MHz, CDCl₃): δ 9.31 (br. s, 1H), 7.84 (br. s, 1H), 7.15 (s, 1H), 7.00 (s, 2H), 4.96 (br. s, 1H), 2.34 (s, 3H), 2.02 (br. s, 1H), 1.09 (s, 9H). ¹³C{¹H}-NMR (400 MHz, CDCl₃): δ 169.4, 141.3, 137.1, 134.5, 134.1, 131.0, 129.9, 129.8, 125.4, 121.4, 74.8, 34.7, 27.2, 21.2, 17.4. ¹⁹F-NMR (396 MHz, CDCl₃): δ -71.9 (d, ¹*J*_{F-P} = 732 Hz). ³¹P-NMR (162 MHz, CDCl₃): δ -144.4 (d, ¹*J*_{P-F} = 732 Hz).

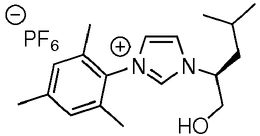

**B.2.2.2. 3-((*S*)-2*N*-4-methylpentanol)-1-mesityl-imidazolium chloride** was prepared from 2,4,6-trimethylaniline (0.28 mL, 2.00 mmol), (*R*)-leucinol (234 mg, 2.00 mmol), glyoxal (0.23 mL, 2.00 mmol, 40 % weight in aqueous solution), formaldehyde (0.15 mL, 2.00 mmol, 37 % weight in aqueous solution) and acetic acid (1.03 mL, 18.0 mmol) at 60°C for 5 minutes, then potassium hexafluorophosphonate (368 mg, 2.0 mmol). The desired hexafluorophosphonate salt was obtained as a pale white solid (482 g, 56 %). 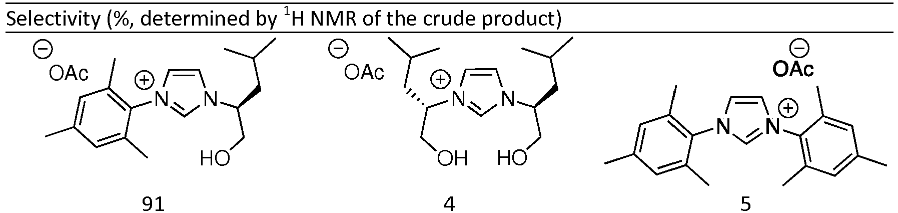 ¹H-NMR (400 MHz, CDCl₃): δ 8.51-8.49 (m, 1H), 7.69-7.67 (m, 1H), 7.24-7.22 (m, 1H), 7.01 (br. s, 2H), 4.75-4.66 (m, 1H), 3.97 (dd, ²*J*_{H-H} = 12.2 Hz, ³*J*_{H-H} = 3.6 Hz, 1H), 3.73 (dd, ²*J*_{H-H} = 12.2 Hz, ³*J*_{H-H} = 7.6 Hz, 1H), 2.73 (br. s, 1H), 2.34 (s, 3H), 2.01 (s, 6H), 1.93-1.84 (m, 1H), 1.76-1.67 (m, 1H), 1.52-1.40 (m, 1H), 0.95 (d, ³*J*_{H-H} = 6.8 Hz, 3H), 0.93 (d, ³*J*_{H-H} = 6.8 Hz, 3H). ¹³C{¹H}-NMR (400 MHz, CDCl₃): δ 141.5, 136.8, 134.7, 134.2, 130.7, 130.0, 129.9, 123.9, 121.4, 64.0, 62.1, 38.9, 25.1, 22.6, 21.9, 21.2, 17.2. ¹⁹F-NMR (396 MHz, CDCl₃): δ -71.9 (d, ¹*J*_{F-P} = 732 Hz). ³¹P-NMR (162 MHz, CDCl₃): δ -144.4 (sep, ¹*J*_{P-F} = 732 Hz).

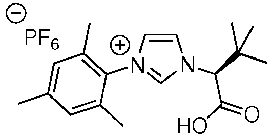

**B.2.2.3. 3-((*S*)-2*N*-3,3-dimethylbutanoic acid)-1-mesityl-imidazolium chloride** was prepared from 2,4,6-trimethylaniline (0.28 mL, 2.00 mmol), (*R*)-*tert*-leucine (262 mg, 2.00 mmol), glyoxal (0.23 mL, 2.00 mmol, 40 % weight in aqueous solution), formaldehyde (0.15 mL, 2.00 mmol, 37 % weight in aqueous solution) and acetic acid (1.03 mL, 18.0 mmol) at 60°C for 5 minutes, then potassium hexafluorophosphonate (368 mg, 2.0 mmol). The desired hexafluorophosphonate salt was obtained as a pale white solid (321 mg, 36 %). 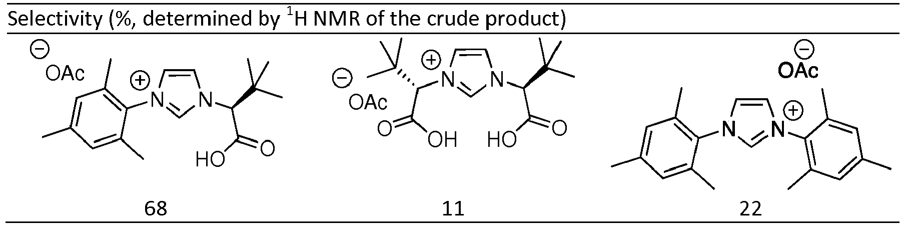 ¹H-NMR (400 MHz, CDCl₃): δ 8.47 (s, 1H), 7.65 (t, ³*J*_{H-H} = 1.6 Hz, 1H), 7.25 (t, ³*J*_{H-H} = 1.6 Hz, 1H), 7.02 (br. s, 2H), 4.48-4.45 (m, 1H), 4.18-4.14 (m, 1H), 4.07-4.01 (m, 1H), 2.70-2.67 (m, 1H), 1.95 (s, 6H), 2.34 (s, 3H), 2.02 (s, 6H), 1.03 (s, 9H). ¹³C{¹H}-NMR (400 MHz, CDCl₃): δ 141.5, 136.6, 134.4, 134.2, 130.5, 129.9, 129.8, 123.6, 123.1, 72.1, 59.6, 33.8, 26.8, 21.1, 17.1, 17.0. ¹⁹F-NMR (396 MHz, CDCl₃): δ -72.2 (d, ¹*J*_{F-P} = 733 Hz). ³¹P-NMR (162 MHz, CDCl₃): δ -134.4 (sep, ¹*J*_{P-F} = 733 Hz). HRMS calcd for C₁₈H₂₄N₂O₂⁺ [M-BF₄]⁺: m/z 301.1916, found: m/z 301.1913 (1 ppm).

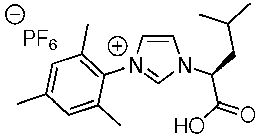

**B.2.2.4. 3-((*S*)-2*N*-4-methylpentanoic acid)-1-mesityl-imidazolium chloride** was prepared from 2,4,6-trimethylaniline (0.28 mL, 2.00 mmol), (*R*)-leucine (262 mg, 2.00 mmol), glyoxal (0.23 mL, 2.00 mmol, 40 % weight in aqueous solution), formaldehyde (0.15 mL, 2.00 mmol, 37 % weight in aqueous solution) and acetic acid (1.03 mL, 18.0 mmol) at 60°C for 5 minutes, then potassium hexafluorophosphonate (368 mg, 2.0 mmol). The desired hexafluorophosphonate salt was obtained as a pale white solid (500 mg, 56 %). 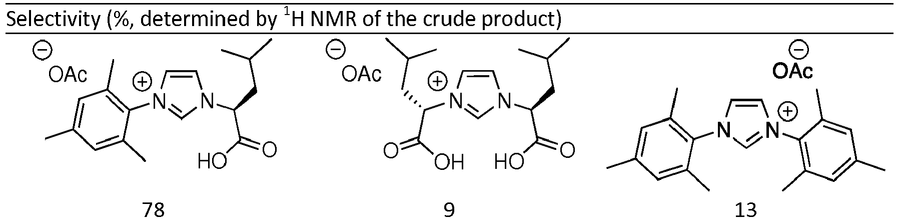 ¹H-NMR (400 MHz, CDCl₃): δ 9.51 (br. s, 1H), 9.00 (s, 1H), 7.82 (s, 1H), 7.26 (s, 1H), 7.01 (s, 2H), 5.48-5.40 (m, 1H), 2.34 (s, 3H), 2.18-1.99 (m, 3H), 2.02 (s, 3H), 2.01 (s, 3H), 1.50-1.38 (m, 1H), 0.97 (d, ³*J*_{H-H} = 6.8 Hz, 3H), 0.93 (d, ³*J*_{H-H} = 6.8 Hz, 3H). ¹³C{¹H}-NMR (400 MHz, CDCl₃): δ 169.9, 141.6, 137.3, 134.4, 134.3, 130.7, 130.0, 130.0, 123.6, 123.2, 61.3, 41.0, 25.3, 22.6, 21.3, 21.2, 17.2, 17.2. ¹⁹F-NMR (396 MHz, CDCl₃): δ -71.5 (d, ¹*J*_{F-P} = 732 Hz). ³¹P{¹H}-NMR (162 MHz, CDCl₃): δ -144.3 (sep, ¹*J*_{P-F} = 732 Hz).

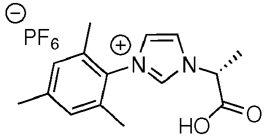

**B.2.2.5. 3-((*R*)-2*N*-propanoic acid)-1-mesityl-imidazolium chloride** was prepared from 2,4,6-trimethylaniline (0.31 mL, 2.22 mmol), (R)-alanine (262 mg, 2.00 mmol), glyoxal (0.25 mL, 2.22 mmol, 40 % weight in aqueous solution), formaldehyde (0.16 mL, 2.22 mmol, 37 % weight in aqueous solution) and acetic acid (1.14 mL, 20.0 mmol) at 60°C for 5 minutes, then potassium hexafluorophosphonate (408 mg, 2.22 mmol). The desired hexafluorophosphonate salt was obtained as a pale white solid (322 mg, 36 %). 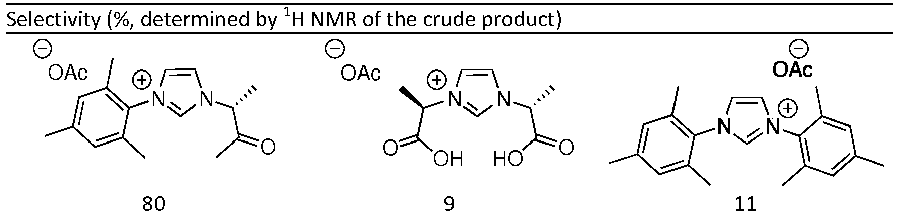 ¹H-NMR (400 MHz, CDCl₃): δ 8.49 (br. s, 1H), 7.84 (br. s, 1H), 7.10 (br. s, 1H), 6.94 (br. s, 1H), 5.18 (q, ³*J*_{H-H} = 7.2Hz, 1H), 2.29 (s, 3H), 1.95 (s, 6H), 1.75 (d, ³*J*_{H-H} = 7.2 Hz, 3H). ¹³C-NMR (100 MHz, CDCl₃): δ 175.1, 141.1, 135.9, 134.6, 130.9, 129.8, 123.3, 123.1, 60.3, 21.2, 18.9, 17.1, 17.0. ¹⁹F-NMR (396 MHz, CDCl₃): δ -72.3 (d, ¹*J*_{F-P} = 730 Hz). ³¹P-NMR (162 MHz, CDCl₃): δ -144.5 (sep, ¹*J*_{P-F} = 730 Hz). [a]²⁰ D = -23.0 (c = 1.00 (CHCl₃)).

### B.2.3. Imidazolium tetrafluoroborate salts.

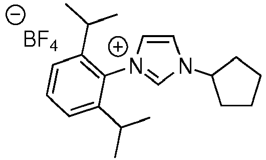

**B.2.3.1. 3-cyclopentyl-1-di*iso*propylphenyl-imidazolium tetrafluoroborate** was prepared as previously reported starting from cyclopentylamine (0.99 mL, 10 mmol), 2,6-di*iso*propylaniline (1.9 mL, 10 mmol), glyoxal (1.1 mL, 10 mmol, 40 % weight in aqueous solution), formaldehyde (0.74 mL, 10 mmol, 37 % weight in aqueous solution) and acetic acid (5.1 mL, 90 mmol) at 90°C for 5 minutes, then potassium tetrafluoroborate (1.26 g, 10 mmol) was added and the mixture was cooled down to room temperature for 30 min. CH₂Cl₂ (30 mL) was added and the organic layer was washed with brine (2x25 mL), dried over magnesium sulfate, filtered and the volatils were removed under reduced pressure. The crude mixture was analysed by ¹H NMR to determine the selectivity. The desired imidazolium salt was obtained as a pale brown solid (750 mg, 20 %) after purification by flash chromatography on silica gel (CH₂Cl₂/ethyl acetate) followed by precipitation in diethyl ether/ethyl acetate 10/1. 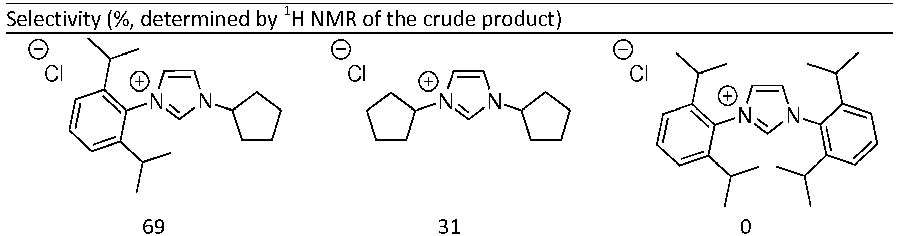 ¹H-NMR (400 MHz, CDCl₃): δ 8.95-8.87 (m, 1H), 7.79-7.76 (m, 1H), 7.51 (t, ³*J*_{H-H} = 7.8 Hz, 1H), 7.29 (br.s, 1H), 7.28-7.26 (m, 1H), 7.27 (br. s, 1H), 5.08 (qi, ³*J*_{H-H} = 7.2 Hz, 1H), 2.47-2.36 (m, 2H), 2.22 (sep, ³*J*_{H-H} = 6.8 Hz, 1H), 2.00-1.85 (m, 4H), 1.84-1.72 (m, 2H), 1.15 (d, ³*J*_{H-H} = 6.8 Hz, 6H), 1.13 (d, ³*J*_{H-H} = 6.8 Hz, 6H). ¹³C{¹H}-NMR (100 MHz, CDCl₃): δ 145.5, 136.5, 131.9, 130.3, 125.3, 124.7, 121.4, 62.0, 33.7, 28.8, 24.3, 24.1, 23.9. ¹¹B-NMR (128 MHz, CDCl₃): δ -1.01. ¹⁹F-NMR (396 MHz, CDCl₃): δ -151.9.

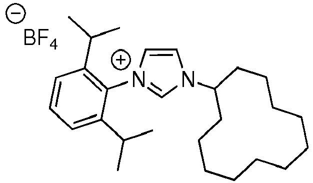

**B.2.3.2. 3-cyclododecyl-1-di*iso*propylphenyl-imidazolium tetrafluoroborate.** In a dry round-bottomed flask were placed 3-cyclododecyl-1-di*iso*propylphenyl-imidazolium chloride (6.21 g, 14.4 mmol), potassium tetrafluoroborate (1.89 g, 15.1 mmol) and dichloromethane (100 mL) and the mixture was stirred at room temperature for 2 h. The organic layer was washed with water (50 mL), brine (50 mL), dried over magnesium sulfate, filtered and the solvent was removed under reduced pressure. The desired imidazolium tetrafluoroborate salt was obtained as a pale white solid (6.21 g, 89 %). ¹H-NMR (400 MHz, CDCl₃): δ 9.82 (br. s, 1H), 7.97 (s, 1H), 7.47 (t, ³*J*_{H-H} = 8.0 Hz, 1H), 7.27-7.26 (m, 1H), 7.25 (s, 1H), 7.23 (s, 1H), 5.05-5.02 (m, 1H), 2.25-2.11 (m, 4H), 1.88-1.80 (m, 2H), 1.51-1.26 (m, 18H), 1.15 (d, ³*J*_{H-H} = 6.8 Hz, 6H), 1.11 (d, ³*J*_{H-H} = 6.8 Hz, 6H). ¹³C-NMR (100 MHz, CDCl₃): δ 145.4, 137.4, 131.8, 130.4, 124.8, 124.6, 121.8, 59.3, 30.2, 28.8, 24.3, 24.1, 23.9, 23.7, 23.3, 21.2. ¹¹B-NMR (128 MHz, CDCl₃/CD₃OD 1/1): δ -1.00. ¹⁹F-NMR (396 MHz, CDCl₃): δ -151.8.

### B.3. Metallated complexes

### B.3.1. Silver Complexes

**General procedure for the synthesis of the [(NHC)AgCl] complexes.** In a dry Schlenk were placed Ag₂O (0.5 equiv.), imidazolium chloride salt (1.0 equiv.) and dichloromethane (0.04 M solution compared to the imidazolium salt) under argon atmosphere. The mixture was stirred at room temperature for 14 h in darkness, then filtered on a celite bed. The resulting solid was washed with ethyl acetate to isolate the desired product as a white solid.

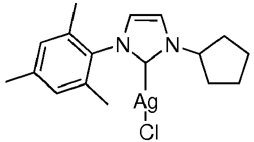

**B.3.1.1. [(3-cyclopentyl-1-mesityl-imidazol-2-ylidene)silver chloride]** was prepared from 3-cyclopentyl-1-mesityl-imidazolium chloride (29 mg, 0.10 mmol), Ag₂O (12 mg, 0.05 mmol) and CH₂Cl₂ (2.5 mL). The desired compoound was obtained as a white solid (31 mg, 78 % yield). ¹H-NMR (400 MHz, CDCl₃): δ 7.21-7.17 (m, 1H), 6.95-6.91 (m, 3H), 4.95 (qi, ³*J*_{H-H} = 6.4 Hz, 1H), 2.35-2.26 (m, 2H), 2.32 (s, 3H), 1.99-1.81 (m, 6H), 1.95 (s, 6H), 1.81-1.72 (m, 2H). ¹³C{¹H}-NMR (100 MHz, CDCl₃): δ 140.7, 137.6, 134.0, 130.7, 129.5, 123.6, 120.9, 61.3, 33.6, 23.8, 20.8, 17.4.

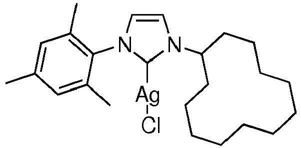

**B.3.1.2. [(3-cyclododecyl-1-mesityl-imidazol-2-ylidene)silver chloride]** was prepared from 3-cyclododecyl-1-mesityl-imidazolium chloride (39 mg, 0.10 mmol), Ag₂O (12 mg, 0.05 mmol) and CH₂Cl₂ (2.5 mL). The desired compound was obtained as a white solid (43 mg, 86 % yield). ¹H-NMR (400 MHz, CDCl₃): δ 7.17-7.14 (m, 1H), 6.95-6.92 (m, 2H), 4.67 (qi, ³*J*_{H-H} = 6.4 Hz, 1H), 2.32 (s, 3H), 2.15-2.04 (m, 2H), 1.96 (s, 6H), 1.78-1.68 (m, 2H), 1.60-1.51 (m, 2H), 1.51-1.32 (m, 16H). ¹³C{¹H}-NMR (100 MHz, CDCl₃): δ 139.1, 135.3, 134.5, 129.1, 122.4, 118.5, 58.4, 31.4, 23.5, 23.3, 23.1, 23.0, 21.5, 20.8, 17.4.

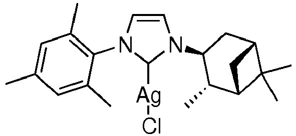

**B.3.1.3. [(3-(*1R,2S,3S,5R*)-isopinocampheyl-1-mesityl-imidazol-2-ylidene)silver chloride]** was prepared from 3-(*1R,2S,3S,5R*)-isopinocampheyl-1-mesitylimidazolium chloride (150 mg, 0.42 mmol), Ag₂O (50 mg, 0.21 mmol) and CH₂Cl₂ (10 mL). The desired silver complex was obtained as a white solid (178 mg, 91 % yield). ¹H-NMR (400 MHz, CDCl₃): δ 7.31 (s, 1H), 6.99 (d, ³*J*_{H-H} = 1.6 Hz, 1H), 6.93 (s, 2H), 4.95 (dt, ³*J*_{H-H} = 10.0 Hz, ³J_{H-H} = 7.6 Hz, 1H), 2.75-2.68 (m, 1H), 2.64-2.58 (m, 1H), 2.31 (s, 3H), 2.33-2.26 (m, 1H), 2.14-2.04 (m, 2H), 1.97-1.95 (m, 7H), 1.29 (s, 3H), 1.19 (d, ³*J*_{H-H} = 10.2 Hz, 1H), 1.17 (d, ³*J*_{H-H} = 7.5 Hz, 3H), 1.10 (s, 3H). ¹³C{¹H}-NMR (100 MHz, CDCl₃): δ 181.1 (d, 1*J*_{C-Ag} = 256 Hz), 139.6, 135.5, 134.9, 134.8, 129.6, 129.5, 123.7-123.6 (m), 118.4-118.3 (m), 62.4, 47.6, 45.8, 41.7, 39.3, 37.1, 35.5, 28.1, 23.8, 21.2, 20.3, 17.8, 17.7. [a]²⁰_{D} = + 2.0 (c = 0.96 (CHCl₃)).

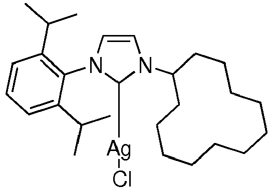

**B.3.1.4. [(3-cyclododecy)-1-di*iso*propylphenyl-imidazol-2-ylidene)silver chloride]** was prepared from 3-cyclododecyl-1-diisopropylphenyl-imidazolium chloride (100 mg, 0.230 mmol), Ag₂O (27 mg, 0.115 mmol) and CH₂Cl₂ (10 mL). The desired product was obtained as a white solid (100 mg, 80 % yield). ¹H-NMR (400 MHz, CDCl₃): δ 7.43 (t, ³*J*_{H-H} = 7.6 Hz, 1H), 7.24 (s, 2H), 7.22 (s, 1H), 7.18 (t, ³*J*_{H-H} = 1.6 Hz, 1H), 6.98 (t, ³*J*_{H-H} = 1.6 Hz, 1H), 4.70 (qi, ³*J*_{H-H} = 6.4 Hz, 1H), 2.32 (sep, ³*J*_{H-H} = 6.8 Hz, 2H), 2.15-2.07 (m, 2H), 1.79-1.71 (m, 2H), 1.59-1.55 (m, 2H), 1.48-1.37 (m, 16H), 1.21 (d, ³*J*_{H-H} = 6.8 Hz, 6H), 1.11 (d, ³*J*_{H-H} = 6.8 Hz, 6H). ¹³C-NMR (100 MHz, CDCl₃): 145.6, 134.9, 130.3, 124.2, 124.1, 123.9, 123.8, 118.5, 118.4, 58.6, 31.6, 28.2, 24.5, 24.2, 23.7, 23.5, 23.2, 23.1, 21.6.

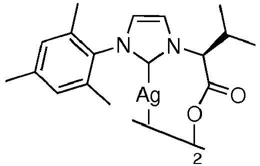

**B.3.1.5. [3-((*S*)-2*N*-3-methylbutanoic acid)-1-mesityl-imidazol-2-ylidene)-silver]** was prepared from 3-((*S*)-2*N*-3-methylbutanoate)-1-mesityl-imidazolinium (54 mg, 0.189 mmol), Ag₂O (22 mg, 0.094 mmol) and CH₂Cl₂ (5 mL). The desired compound was obtained as a brown oil (67 mg, 90 % yield). ¹H-NMR (400 MHz, acetone-d₆): δ 7.77 (br. s, 1H), 7.20 (br. s, 1H), 6.99 (br. s, 2H), 4.63 (br. s, 1H), 2.36 (br. s, 1H), 2.33 (br. s, 3H), 1.90 (br. s, 6H), 1.00-0.93 (m, 3H), 0.70 (br. s, 3H).

### B.3.2. Copper Complexes

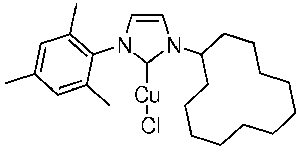

**B.3.2.1. Synthesis of [(3-cyclododecyl-1-mesityl-imidazol-2-ylidene)copper chloride].** In a flame-dried Schlenk were placed CuCl (59 mg, 0.60 mmol), *t*-BuOK (67 mg, 0.60 mmol) and THF (3 mL) under argon atmosphere. The mixture was stirred at room temperature for 10 min, then 3-cyclododecyl-1-mesityl-imidazolium chloride (233 mg, 0.60 mmol) was added and the resulting mixture was stirred for 16 h at room temperature. The mixture was filtered on a celite bed with acetone, and then concentrated under reduced pressure The crude mixture was purified by washing with diethyl ether to isolate the desired product as a pale white solid (103 mg, 38 %). ¹H-NMR (400 MHz, CDCl₃): δ 7.09 (s, 1H), 6.93 (s, 2H), 6.85 (s, 1H), 4.74 (qi, 3*J*_{HH} = 6.6 Hz, 1H), 2.31 (s, 3H), 2.18-2.05 (m, 2H), 1.98 (s, 6H), 1.79-1.68 (m, 2H), 1.65-1.54 (m, 2H), 1.49-1.30 (m, 17H). ¹³C{¹H}-NMR (100 MHz, CDCl₃): δ 176.9, 139.3, 134.8, 129.4, 122.1, 118.3, 58.2, 32.0, 23.9, 23.7, 23.3, 23.2, 21.9, 21.2, 17.8.

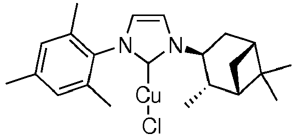

**B.3.2.2. [(3-(*1R,2S,3S,5R*)-isopinocampheyl-1-mesityl-imidazol-2-ylidene)gold chloride]** was prepared from [(3-(*1R,2S,3S,5R*)-isopinocampheyl-1-mesityl-imidazol-2-ylidene)silver chloride] (50 mg, 0.107 mmol), Me₂S.AuCl (32 mg, 0.107 mmol) and CH₂Cl₂ (10 mL). The desired gold complex was obtained as a white solid (53 mg, 89 %). ¹H-NMR (400 MHz, CDCl₃): δ 7.30 (d, ³*J*_{H-H} = 2.0 Hz, 1H), 6.94 (s, 2H), 6.92 (d, ³*J*_{H-H} = 2.0 Hz, 1H), 5.38 (dt, ³*J*_{H-H} = 10.5 Hz, ³*J*_{H-H} = 7.6 Hz, 1H), 2.80-2.73 (m, 1H), 2.64-2.58 (m, 1H), 2.35-2.27 (m, 1H), 2.32 (s, 3H), 2.14-2.10 (m, 1H), 2.07-1.95 (m, 2H), 2.01 (s, 3H), 2.00 (s, 3H), 1.30 (s, 3H), 1.23 (d, ³*J*_{H-H} = 7.2 Hz, 3H), 1.18 (d, ³*J*_{H-H} = 10.3 Hz, 1H), 1.13 (s, 3H). ¹³C{¹H}-NMR (100 MHz, CDCl₃): δ 172.1, 139.7, 135.0, 135.0, 134.9, 134.7, 129.5, 129.5, 123.2, 117.8, 61.3, 47.7, 45.6, 41.7, 39.3, 36.8, 35.5, 28.1, 23.8, 21.2, 20.2, 17.9, 17.8. [a]²⁰_{D} = - 2.3 (c = 1.0 (CHCl₃)).

### B.3.3. Gold Complexes

**General procedure for the synthesis of the [(NHC)AuCl] complexes.** In a dry Schlenk were placed [(3-cycloalkyl-1-mesityl-imidazol-2-ylidene)silver chloride] (1.0 equiv.), Me₂S.AuCl (1.0 equiv.) and CH₂Cl₂ (0.01 M) under argon atmosphere. The mixture was stirred at room temperature overnight, then filtrated on celite bed, and the solvent was removed under pressure. The white solid was washed with pentane to isolate the desired gold complex.

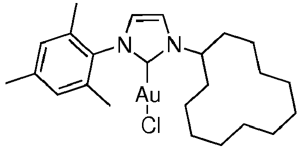

**B.3.3.1. Synthesis of [(3-cyclododecyl-1-mesityl-imidazol-2-ylidene)gold chloride]** was prepared from [(3-cyclododecyl-1-mesityl-imidazol-2-ylidene)silver chloride] (28 mg, 0.056 mmol), Me₂S.AuCl (16 mg, 0.056 mmol) and CH₂Cl₂ (7 mL). The desired gold complex was obtained as a white solid (33 mg, 99 %). ¹H-NMR (400 MHz, CDCl₃): δ 7.15 (d, ³*J*_{H-H} = 2.0 Hz, 1H), 6.94-6.92 (m, 2H), 6.86 (d, ³*J*_{H-H} = 2.0 Hz, 1H), 5.04 (qi, ³*J*_{H-H} = 6.4 Hz, 1H), 2.31 (s, 3H), 2.16-2.04 (m, 2H), 1.99 (s, 6H), 1.77-1.62 (m, 4H), 1.56-1.31 (m, 17H). ¹³C{¹H}-NMR (100 MHz, CDCl₃): δ 171.5, 139.6, 135.0, 134.9, 129.4, 122.3, 117.8, 58.0, 31.4, 23.9, 23.6, 23.5, 23.3, 21.8, 21.2, 17.8.

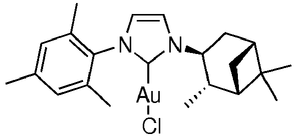

**B.3.3.2. [(3-(*1R,2S,3S,5R*)-isopinocampheyl-1-mesityl-imidazol-2-ylidene)gold chloride]** was prepared from [(3-(*1R,2S,3S,5R*)-isopinocampheyl-1-mesityl-imidazol-2-ylidene)silver chloride] (50 mg, 0.107 mmol), Me₂S.AuCl (32 mg, 0.107 mmol) and CH₂Cl₂ (10 mL). The desired gold complex was obtained as a white solid (53 mg, 89 %). ¹H-NMR (400 MHz, CDCl₃): δ 7.30 (d, ³*J*_{H-H} = 2.0 Hz, 1H), 6.94 (s, 2H), 6.92 (d, ³*J*_{H-H} = 2.0 Hz, 1H), 5.38 (dt, ³*J*_{H-H} = 10.5 Hz, ³*J*_{H-H} = 7.6 Hz, 1H), 2.80-2.73 (m, 1H), 2.64-2.58 (m, 1H), 2.35-2.27 (m, 1H), 2.32 (s, 3H), 2.14-2.10 (m, 1H), 2.07-1.95 (m, 2H), 2.01 (s, 3H), 2.00 (s, 3H), 1.30 (s, 3H), 1.23 (d, ³*J*_{H-H} = 7.2 Hz, 3H), 1.18 (d, ³*J*_{H-H} = 10.3 Hz, 1H), 1.13 (s, 3H). ¹³C{¹H}-NMR (100 MHz, CDCl₃): δ 172.1, 139.7, 135.0, 135.0, 134.9, 134.7, 129.5, 129.5, 123.2, 117.8, 61.3, 47.7, 45.6, 41.7, 39.3, 36.8, 35.5, 28.1, 23.8, 21.2, 20.2, 17.9, 17.8. [a]²⁰_{D} = - 2.3 (c = 1.0 (CHCl₃)).

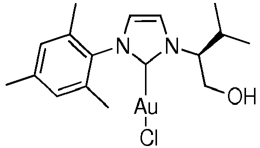

**B.3.3.3. Synthesis of [3-((*S*)-2*N*-3-methylbutanol)-1-mesityl-imidazol-2-ylidene)gold chloride].** In a dry round-bottomed flask equipped with a reflux condenser were placed 3-((*S*)-2*N*-3,3-dimethylbutanol)-1-mesityl-imidazolium chloride (100 mg, 0.32 mmol), Ag₂O (540 mg, 0.66 mmol), anhydrous THF (2.3 mL), anhydrous benzene (2.3 mL) and 4Å molecular sieves (250 mg) under argon atmosphere. The mixture was stirred at reflux for 3 h, then cooled down to room temperature. CH₂Cl₂ (16 mL) was added and the crude mixture was filtered on a celite bed, then the solvents were removed under reduced pressure leading to a pale brown solid.

A portion of resulting silver complex (65 mg, 0.17 mmol) was dissolved in CH₂Cl₂ (20 mL) and Me₂S.AuCl (50 mg, 0.17 mmol) was added. The mixture was stirred at room temperature overnight, then filtered on a celite bed, and the solvent was removed under reduced pressure. The desired gold complex was obtained as a yellow solid (76 mg, 88 %). ¹H-NMR (400 MHz, CDCl₃): δ 7.38 (d, ³*J*_{H-H} = 2.0 Hz, 1H), 6.87 (br. s, 2H), 6.80 (d, ³*J*_{H-H} = 2.0 Hz, 1H), 4.55-4.49 (m, 1H), 4.07 (dd, ¹*J*_{H-H} = 11.8 Hz, ³*J*_{H-H} = 5.4 Hz, 1H), 3.89 (dd, ¹*J*_{H-H} = 11.8 Hz, ³*J*_{H-H} = 2.6 Hz, 1H), 2.38-2.29 (m, 1H), 2.25 (s, 3H), 1.94 (s, 3H), 1.93 (s, 3H), 1.06 (d, ³*J*_{H-H} = 6.8 Hz, 3H), 0.78 (d, ³*J*_{H-H} = 6.8 Hz, 3H).

### B.3.4. Iridium Complexes

**B.3.4.1. General procedure for the synthesis of the [(NHClr(cod)Cl] complexes.** In a flame-dried Schlenk were placed [Ir-µCl-(cod)]₂ (1.0 equiv.), *t*-BuOK (2.0 equiv.) and THF (0.03 M solution compared to the imidazolium salt) under argon atmosphere. The mixture was stirred at room temperature for 10 min, then imidazolium tetrafluoroborate salt (1.8 equiv.) was added, and the resulting mixture was stirred for 2 h at room temperature. The mixture was concentrated under reduced pressure, then purified by flash chromatography on silica gel with diethyl ether to isolate the desired product as a yellow solid.

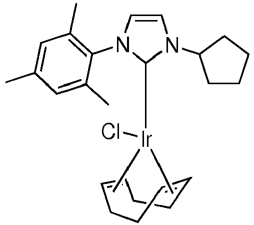

**B.3.4.1.1. [(3-cyclopentyl-1-mesityl-imidazol-2-ylidene)-(cyclooctadiene)iridium chloride]** was prepared from [Ir-µCl-(cod)]₂ (59 mg, 0.088 mmol), *t*-BuOK (20 mg, 0.176 mmol), 3-cyclopentyl-1-mesityl-imidazolium tetrafluoroborate (54 mg, 0.158 mmol) in THF (5 mL). The desired iridium complex was obtained as a yellow solid (82 mg, 84 %). ¹H-NMR (400 MHz, CDCl₃): δ 7.06 (d, ³*J*_{H-H} = 2.0 Hz, 1H), 7.00 (br. s, 1H), 6.89 (br. s, 1H), 6.75 (d, ³*J*_{H-H} = 2.0 Hz, 1H), 5.97 (qi, ³*J*_{H-H} = 7.4 Hz, 1H), 4.49-4.43 (m, 1H), 4.34-4.26 (m, 1H), 3.18-3.10 (m, 1H), 2.68-2.61 (m, 1H), 2.49-2.40 (m, 1H), 2.35 (s, 3H), 2.31 (s, 3H), 2.22-2.10 (m, 1H), 2.03-1.92 (m, 1H), 1.89 (s, 3H), 1.87-1.68 (m, 7H), 1.67-1.58 (m, 2H), 1.43-1.29 (m, 2H), 1.14-1.03 (m, 1H). ¹³C{¹H}-NMR (100 MHz, CDCl₃): δ 179.8, 138.6, 137.1, 136.1, 134.4, 129.5, 128.1, 123.5, 117.0, 83.4, 81.9, 62.1, 52.3, 50.0, 35.5, 35.2, 33.3, 31.9, 30.5, 28.2, 25.1, 24.9, 21.2, 19.7, 18.0.

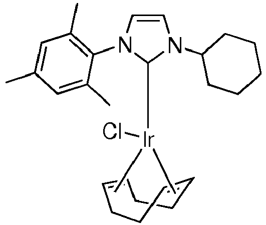

**B.3.4.1.2. [(3-cyclohexyl-1-mesityl-imidazol-2-ylidene)-(cyclooctadiene)iridium chloride]** was prepared from [Ir-µCl-(cod)]₂ (59 mg, 0.088 mmol), *t*-BuOK (20 mg, 0.176 mmol), 3-cyclohexyl-1-mesityl-imidazolium tetrafluoroborate (56 mg, 0.158 mmol) in THF (5 mL). The desired iridium complex was obtained as a yellow solid (80 mg, 80 %). ¹H-NMR (400 MHz, CDCl₃): δ 7.04 (d, ³*J*_{H-H} = 2.0 Hz, 1H), 7.00 (br. s, 1H), 6.89 (br. s, 1H), 6.73 (d, ³*J*_{H-H} =2.0 Hz, 1H), 5.59-5.49 (m, 1H), 4.46-4.35 (m, 2H), 3.13-3.05 (m, 2H), 2.74-2.65 (m, 1H), 2.46-2.39 (m, 1H), 2.35 (s, 3H), 2.31 (s, 3H), 2.17-2.06 (m, 2H), 2.05-1.91 (m, 2H), 1.87 (s, 3H), 1.83-1.74 (m, 2H), 1.65-1.48 (m, 7H), 1.48-1.34 (m, 2H), 1.29-1.20 (m, 1H), 1.20-1.09 (m, 1H). ¹³C{¹H}-NMR (100 MHz, CDCl₃): δ 179.2, 138.6, 137.1, 136.1, 134.5, 129.5, 128.1, 123.1, 117.3, 82.8, 82.4, 60.5, 51.7, 50.3, 35.6, 35.1, 33.3, 32.4, 30.0, 28.7, 26.1, 25.7, 21.2, 19.7, 17.9.

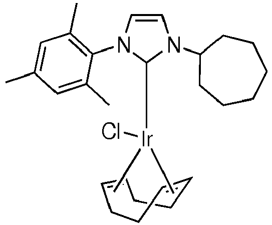

**B.3.4.1.3. [(3-cycloheptyl-1-mesityl-imidazol-2-ylidene)-(cyclooctadiene)iridium chloride]** was prepared from [Ir-µCl-(cod)]₂ (59 mg, 0.088 mmol), *t*-BuOK (20 mg, 0.176 mmol), 3-cycloheptyl-1-mesityl-imidazolium tetrafluoroborate (58 mg, 0.158 mmol) in THF (5 mL). The desired iridium complex was obtained as a yellow solid (88 mg, 86 %). ¹H-NMR (400 MHz, CDCl₃): δ 7.04 (d, ³*J*_{H-H} = 2.0 Hz, 1H), 6.99 (br s, 1H), 6.89 (br. s, 1H), 6.72 (d, ³*J*_{H-H} = 2.0 Hz, 1H), 5.81-5.72 (m, 1H), 4.48-4.41 (m, 1H), 4.40-4.33 (m, 1H), 3.11-3.05 (m, 1H), 2.75-2.68 (m, 1H), 2.47-2.38 (m, 1H), 2.34 (s, 3H), 2.30 (s, 3H), 2.15-2.06 (m, 2H), 2.06-1.98 (m, 1H), 1.87 (s, 3H), 1.83-1.69 (m, 8H), 1.65-1.34 (m, 7H). ¹³C{¹H}-NMR (100 MHz, CDCl₃): δ 178.4, 138.5, 137.1, 136.0, 134.5, 129.5, 128.0, 123.3, 117.2, 82.5, 82.5, 62.3, 51.4, 50.5, 37.4, 35.3, 34.8, 32.6, 29.7, 29.0, 27.9, 27.8, 25.4, 25.0, 21.2, 19.6, 17.9.

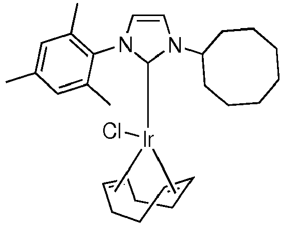

**B.3.4.1.4. [(3-cyclooctyl-1-mesityl-imidazol-2-ylidene)-(cyclooctadiene)iridium chloride]** was prepared from [Ir-µCl-(cod)]₂ (59 mg, 0.088 mmol), *t*-BuOK (20 mg, 0.176 mmol), 3-cyclooctyl-1-mesityl-imidazolium tetrafluoroborate (61 mg, 0.158 mmol) in THF (5 mL). The desired iridium complex was obtained as a yellow solid (87 mg, 83 %). ¹H-NMR (400 MHz, CDCl₃): δ 7.01 (d, ³*J*_{H-H} = 2.0 Hz, 1H), 7.00 (br. s, 1H), 6.89 (br. s, 1H), 6.72 (d, ³*J*_{H-H} = 2.0 Hz, 1H), 6.02-5.91 (m, 1H), 4.55-4.45 (m, 1H), 4.39-4.32 (m, 1H), 3.10-3.02 (m, 1H), 2.80-2.75 (m, 1H), 2.35 (s, 3H), 2.31 (s, 3H), 2.17-2.05 (m, 2H), 2.00-1.91 (m, 2H), 1.88 (s, 3H), 1.91-1.64 (m, 12H), 1.63-1.56 (m, 1H), 1.56-1.46 (m, 3H), 1.46-1.35 (m, 1H), 1.26-1.16 (m, 1H). ¹³C{¹H}-NMR (100 MHz, CDCl₃): δ 178.3, 138.6, 137.1, 136.0, 134.5, 129.5, 128.1, 123.4, 117.3, 83.0, 82.3, 60.4, 51.0, 51.0, 36.8, 34.4, 34.3, 33.2, 29.4, 29.2, 27.1, 26.4, 26.0, 24.9, 24.9, 21.2, 19.7, 17.9.

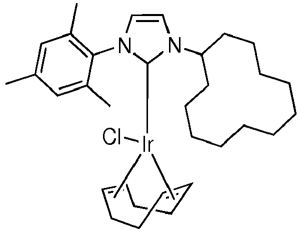

**B.3.4.1.5. [(3-cyclododecyl-1-mesityl-imidazol-2-ylidene)-(cyclooctadiene)iridium chloride]** was prepared from [Ir-µCl-(cod)]₂ (49 mg, 0.073 mmol), *t*-BuOK (18 mg, 0.158 mmol), 3-cyclododecyl-1-mesityl-imidazolium tetrafluoroborate (59 mg, 0.134 mmol) in THF (5 mL). The desired iridium complex was obtained as a yellow solid (92 mg, 99 %). ¹H-NMR (400 MHz, CDCl₃): δ 7.05 (d, ³*J*_{H-H} = 2.0 Hz, 1H), 7.02 (br. s, 1H), 6.90 (br. s, 1H), 6.73 (d, ³*J*_{H-H} = 2.0 Hz, 1H), 5.67-5.58 (m, 1H), 4.60-4.53 (m, 1H), 4.34-4.28 (m, 1H), 3.02-2.95 (m, 1H), 2.88-2.82 (m, 1H), 2.36 (s, 3H), 2.34 (s, 3H), 2.24-2.14 (m, 2H), 2.14-1.99 (m, 2H), 1.88 (s, 3H), 1.87-1.76 (m, 2H), 1.75-1.62 (m, 2H), 1.54-1.50 (m, 2H), 1.50-1.24 (m, 18H). ¹³C{¹H}-NMR (100 MHz, CDCl₃): δ 179.1, 138.6, 137.2, 136.3, 134.7, 129.6, 128.0, 123.3, 117.9, 83.9, 81.9, 57.9, 52.4, 50.0, 34.5, 32.3, 30.5, 30.4, 28.0, 23.5, 23.0, 22.8, 22.7, 22.4, 21.2, 19.8, 17.9.

**B.3.4.2. General procedure for the synthesis of the [(NHC)Ir(CO)₂Cl] complexes**. In a dry flask were placed [(NHC)Ir(cod)Cl] complex and dichloromethane. CO gaz was bubbled into the solution for 15 min, then volatiles were removed under reduced pressure. The resulting crude solid mixture was then washed with pentane to isolate the desired product as a yellow solid.

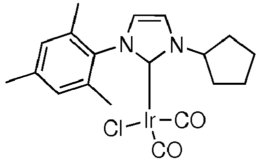

**B.3.4.2.1. [(3-cyclopentyl-1-mesityl-imidazol-2-ylidene)-(bis-(carbon monoxide))iridium chloride]** was prepared from [(3-cyclopentyl-1-mesityl-imidazol-2-ylidene)-(cyclooctadiene)iridium chloride] (18 mg, 0.029 mmol) in dichloromethane (5 mL). The desired iridium complex was obtained as a yellow solid (13 mg, 81 %). ¹H-NMR (400 MHz, CDCl₃): δ 7.21 (d, ³*J*_{H-H} = 2.0 Hz, 1H), 6.98-6.97 (m, 2H), 6.92 (dd, ³*J*_{H-H} = 2.0 Hz, ⁴*J*_{H-H} = 0.4 Hz, 1H), 5.53 (qi, ³*J*_{H-H} = 8.1 Hz, 1H), 2.47-2.36 (m, 2H), 2.36 (s, 3H), 2.07 (s, 6H), 1.95-1.73 (m, 6H). ¹³C{¹H}-NMR (100 MHz, CDCl₃): δ 181.0, 174.7, 168.1, 139.6, 135.3, 129.3, 123.6, 118.3, 62.3, 34.1, 24.6, 21.3, 18.4, *C_{NHC} was not visible on the spectrum.* IR (neat, cm⁻¹): 2062.0, 1965.3 (CO).

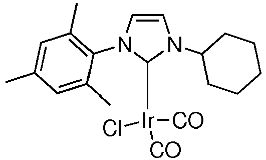

**B.3.4.2.2. [(3-cyclohexyl-1-mesityl-imidazol-2-ylidene)-(bis-(carbon monoxide))iridium chloride]** was prepared from [(3-cyclohexyl-1-mesityl-imidazol-2-ylidene)-(cyclooctadiene)iridium chloride] (23 mg, 0.036 mmol) in dichloromethane (5 mL). The desired iridium complex was obtained as a yellow solid (20 mg, 99 %). ¹H-NMR (400 MHz, CDCl₃): δ 7.20 (d, ³*J*_{H-H} = 2.0 Hz, 1H), 6.97 (s, 2H), 6.90 (d, ³*J*_{H-H} = 2.0 Hz, 1H), 5.09-5.00 (m, 1H), 2.35 (s, 3H), 2.33-2.23 (m, 2H), 2.07 (s, 6H), 1.94-1.86 (m, 2H), 1.83-1.75 (m, 1H), 1.64-1.47 (m, 4H), 1.30-1.18 (m, 1H). ¹³C{¹H}-NMR (100 MHz, CDCl₃): δ 181.1, 174.2, 168.1, 139.6, 135.3, 129.3, 123.3, 118.4, 60.5, 34.2 (br. s), 25.5, 25.4, 18.3 (br. s), *C_{NHC} was not visible on the spectrum.* IR (neat, cm⁻¹): 2062.0, 1965.3 (CO).

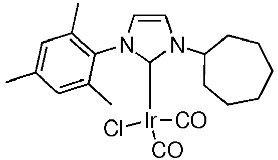

**B.3.4.2.3. [(3-cycloheptyl-1-mesityl-imidazol-2-ylidene)-(bis-(carbon monoxide))iridium chloride]** was prepared from [(3-cycloheptyl-1-mesityl-imidazol-2-ylidene)-(cyclooctadiene)iridium chloride] (24 mg, 0.037 mmol) in dichloromethane (5 mL). The desired iridium complex was obtained as a yellow solid (20 mg, 95 %). ¹H-NMR (400 MHz, CDCl₃): δ 7.20 (d, ³*J*_{H-H} = 2.0 Hz, 1H), 6.97 (s, 2H), 6.90 (d, ³*J*_{H-H} = 2.0 Hz, 1H), 5.30-5.22 (m, 1H), 2.35 (s, 3H), 2.31-2.21 (m, 2H), 2.06 (s, 6H), 1.88-1.57 (m, 11H). ¹³C{¹H}-NMR (100 MHz, CDCl₃): δ 181.1, 173.6, 168.1, 139.6, 135.3, 129.3, 123.5, 118.4, 62.6, 36.1 (br. s), 29.8, 27.8, 24.7, 21.3, 18.4 (br. s.), *C_{NHC} was not visible on the spectrum.* IR (neat, cm⁻¹): 2062.0, 1965.3 (CO).

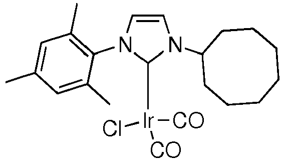

**B.3.4.2.4. [(3-cyclooctyl-1-mesityl-imidazol-2-ylidene)-(bis-(carbon monoxide))iridium chloride]** was prepared from [(3-cyclooctyl-1-mesityl-imidazol-2-ylidene)-(cyclooctadiene)iridium chloride] (21 mg, 0.032 mmol) in dichloromethane (5 mL). The desired iridium complex was obtained as a yellow solid (16 mg, 89 %). ¹H-NMR (400 MHz, CDCl₃): δ 7.18 (d, ³*J*_{H-H} = 2.0 Hz, 1H), 6.70 (s, 2H), 6.90 (d, ³*J*_{H-H} = 2.0 Hz, 1H), 5.50-5.41 (m, 1H), 2.35 (s, 3H), 2.17-2.01 (m, 2H), 2.07 (s, 6H), 1.99-1.88 (m, 2H), 1.83-1.57 (m, 10H). ¹³C{¹H}-NMR (100 MHz, CDCl₃): δ 181.2, 173.7, 168.2, 139.5, 129.3, 123.5, 118.6, 61.0, 34.7 (br. s), 26.6, 26.4, 24.6, 21.3, 18.4 (br. s), *C_{NHC} was not visible on the spectrum.* IR (neat, cm⁻¹): 2062.0, 1965.3 (CO).

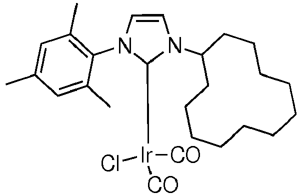

**B.3.4.2.5. [(3-cyclododecyl-1-mesityl-imidazol-2-ylidene)-(bis-(carbon monoxide))iridium chloride]** was prepared from [(3-cyclododecyl-1-mesityl-imidazol-2-ylidene)-(cyclooctadiene)iridium chloride] (25 mg, 0.037 mmol) in dichloromethane (5 mL). The desired iridium complex was obtained as a yellow solid (21 mg, 99 %). ¹H-NMR (400 MHz, CDCl₃): δ 7.18 (d, ³*J*_{H-H} = 1.8 Hz, 1H), 6.97 (br. s, 2H), 6.92 (d, ³*J*_{H-H} = 1.8 Hz, 1H), 5.37 (qi, ³*J*_{H-H} = 6.8 Hz, 1H), 2.35 (s, 3H), 2.16-1.90 (m, 8H), 1.90-1.62 (m, 4H), 1.50-1.30 (16H). ¹³C{¹H}-NMR (100 MHz, CDCl₃): δ 181.1, 174.8, 168.4, 139.5, 135.2, 129.3, 123.6, 118.5, 57.2, 23.0, 22.6, 22.3, 21.3, *C_{NHC} was not visible on the spectrum.* IR (neat, cm⁻¹): 2056.9, 1972.6 (CO).

### B.3.5. Palladium Complexes

**General procedure for the synthesis of the [(NHC)Pd(allyl)Cl] complexes.** In a dry Schlenk were placed [(3-cycloalkyl-1-aryl-imidazol-2-ylidene)silver chloride] (1.0 equiv.), [Pd(π-allyl)Cl]₂ (0.5 equiv.) and anhydrous CH₂Cl₂ (0.02 M compared to the silver complex) under argon atmosphere. The mixture was stirred at room temperature overnight, then filtered on celite bed, and the solvent was removed under pressure. The white solid was washed with pentane to isolate the desired palladium complex.

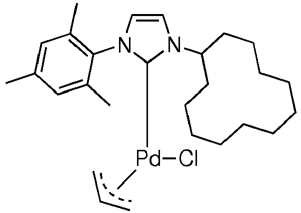

**B.3.5.1. [(3-cyclododecyl-1-mesityl-imidazol-2-ylidene)-(allyl)palladium chloride]** was prepared from [(3-cyclododecyl-1-mesityl-imidazol-2-ylidene)silver chloride] (100 mg, 0.20 mmol), [Pd(π-allyl)Cl]₂ (36 mg, 0.10 mmol) and anhydrous CH₂Cl₂ (10 mL) under argon atmosphere. The desired palladium complex was obtained as a white solid (105 mg, 99% yield). ¹H-NMR (400 MHz, CDCl₃): δ 7.12 (d, ³*J*_{H-H} = 2.0 Hz, 1H), 6.93 (br s, 1H), 6.90 (d, ³*J*_{H-H} = 2.0 Hz, 1H), 6.89 (br s, 1H), 5.23-5.17 (m, 1H), 5.00-4.91 (m, 1H), 4.08 (dd, ²*J*_{H-H} = 1.6 Hz, ³*J*_{H-H} = 5.6 Hz, 1H), 3.10 (d, ³*J*_{H-H} = 6.8 Hz, 1H), 2.96 (d, ³*J*_{H-H} = 13.2 Hz, 1H), 2.30 (s, 3H), 2.18 (s, 3H), 2.01 (s, 3H), 1.99-1.91 (m, 1H), 1.90-1.79 (m, 1H), 1.83 (d, ³*J*_{H-H} = 13.2 Hz, 1H), 1.70-1.64 (m, 4H), 1.40-1.36 (m, 16H). ¹³C{¹H}-NMR (100 MHz, CDCl₃): δ 181.0, 138.6, 136.3, 136.0, 135.3, 129.0, 128.5, 122.4, 118.0, 114.3, 72.5, 56.8, 48.1, 31.5, 30.8, 29.7, 24.3, 24.2, 23.5, 23.4, 23.0, 22.9, 22.8, 22.1, 21.0, 18.4, 17.9.

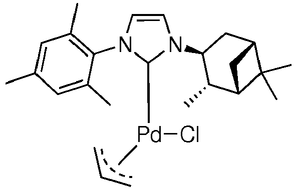

**B.3.5.2. [(3-(*1R,2S,3S,5R*)-isopinocampheyl-1-mesityl-imidazol-2-ylidene)-(allyl)palladium chloride]** was prepared from [(3-(*1R,2S,3S,5R*)-isopinocampheyl-1-mesityl-imidazol-2-ylidene)silver chloride] (143 mg, 0.31 mmol), [Pd(π-allyl)Cl]₂ (58 mg, 0.16 mmol) and anhydrous CH₂Cl₂ (15 mL) under argon atmosphere. The desired palladium complex was obtained as a white solid (mixture of isomers I1/I2 (ratio 1.0/0.6), 133 mg, 85 % yield). ¹H-NMR (400 MHz, CDCl₃): δ 7.28-7.23 (m, 1H, I1+I2), 6.96-6.97 (m, 3H, I1+I2), 5.76-5.47 (m, 1H, I1+I1), 5.12-4.73 (m, 1H, I1+I2), 4.11-4.04 (m, 1H, I1+I2), 3.13-2.92 (m, 3H, I1+I2), 2.58-2.54 (m, 1H, I1+I2), 2.30-2.29 (m, 5H, I1+I2), 2.18-1.89 (m, 9H, I1+I2), 1.56 (d, ³*J*_{H-H} = 7.6 Hz, 0.6H, 12), 1.28-1.26 (m, 3H, I1/I2), 1.17-1.05 (m, 7H, I1/I2). ¹³C-NMR (100 MHz, CDCl₃): δ 181.8, 181.4, 138.8, 138.7, 136.9, 136.5, 136.4, 136.3, 134.7, 129.4, 129.2, 128.6, 128.4, 123.5, 123.3, 118.1, 118.0, 114.5, 114.3, 72.9, 72.1, 60.6, 60.2, 48.8, 48.4, 45.9, 45.5, 41.9, 41.9, 39.3, 39.3, 37.4, 37.0, 35.8, 35.6, 28.3, 28.3, 23.7, 23.7, 21.2, 20.5, 20.0, 18.9, 18.7, 18.1, 17.8. [a]²⁰_{D} = + 28.9 (c = 1.0 (CHCl₃)).

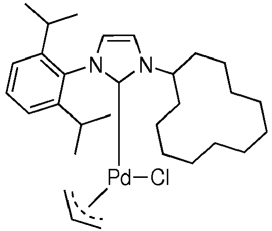

**B.3.5.3. [(3-cyclododecyl-1-di*i*sopropylphenyl-imidazol-2-ylidene)-(allyl)palladium chloride]** was prepared from [(3-cyclododecyl-1-diisopropylphenyl-imidazol-2-ylidene)silver chloride] (127 mg, 0.24 mmol), [Pd(π-allyl)Cl]₂ (43 mg, 0.12 mmol) and anhydrous CH₂Cl₂ (10 mL) under argon atmosphere. The desired palladium complex was obtained as a white solid (110 mg, 78% yield). RMN-¹H (400 MHz, CDCl₃) : δ 7.39 (t, ³*J*_{H-H} = 7.6 Hz, 1H), 7.26 (dd, ³.I_{H-H} = 6.4 Hz, ⁴*J*_{H-H} = 1.2 Hz, 1H), 7.20 (dd, ³*J*_{H-H} = 6.4 Hz, ⁴*J*_{H-H} = 1.2 Hz, 1H), 7.11 (d, ³*J*_{H-H} = 2.0 Hz, 1H), 6.97 (d, ³*J*_{H-H} = 2.0 Hz, 1H), 5.32-5.26 (m, 1H), 4.97-4.91 (m, 1H), 4.09 (dd, ²*J*_{H-H} = 2.0 Hz, ³*J*_{H-H} = 5.6 Hz, 1H), 3.00-2.93 (m, 1H), 2.99 (d, ³*J*_{H-H} = 6.80 Hz, 1H), 2.95 (d, ³*J*_{H-H} = 13.6 Hz, 1H), 2.54 (sep., ³*J*_{H-H} = 6.8 Hz, 1H), 2.01-1.97 (m, 4H), 1.75-1.70 (m, 1H), 1.68-1.63 (m, 1H), 1.65 (d, ³*J*_{H-H} = 12.0 Hz, 1H), 1.50-1.37 (m, 16H), 1.34 (d, ³*J*_{H-H} = 6.4 Hz, 3H), 1.26 (d, ³*J*_{H-H} = 6.8 Hz, 3H), 1.06 (d, ³*J*_{H-H} = 6.8 Hz, 3H), 1.04 (d, ³*J*_{H-H} = 6.8 Hz, 3H). ¹³C-NMR (100 MHz, CDCl₃): 182.2, 147.0, 146.1, 136.2, 129.8, 129.1, 128.3, 124.2, 123.9, 123.4, 117.7, 114.3, 72.9, 57.4, 48.3, 31.3, 30.7, 28.3, 26.5, 26.2, 24.2, 23.6, 23.5, 23.4, 23.3, 22.9, 22.1, 21.9.

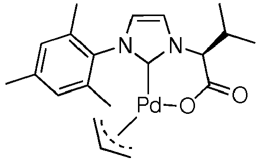

**B.3.5.4. [3-((*S*)-2*N*-3-methylbutanoic acid)-1-mesityl-imidazol-2-ylidene)-(allyl)-palladium].** In a flame-dried Schlenk flask were placed the 3-((*S*)-2*N*-3-methylbutanoate)-1-mesityl-imidazolinium (57 mg, 0.20 mmol), silver oxide (23 mg, 0.10 mmol) and anhydrous CH₂Cl₂ (5 ml). The mixture was protected with aluminum foil and stirred overnight at room temperature. After filtration on celite bed and removing of the solvent under reduced pressure, the corresponding silver salt was placed in a flame-dried Schlenk flask with [Pd(π-allyl)Cl]₂ (36 mg, 0.10 mmol) and anhydrous CH₂Cl₂ (10 mL) under argon atmosphere. The mixture was stirred at room temperature overnight, filtered on celite bed, and purified by column chromatography on silica gel (eluent: CH₂Cl₂/MeOH 90/10) to give a colorless oil (51 mg, 67% yield). The desired palladium complex was obtained as a mixture of isomers (ratio 1/0.6) ¹H-NMR (400 MHz, CDCl₃): δ 7.01 (br. s, 0.6H), 6.99 (br. s, 1H), 6.85 (br. s, 2H), 6.84 (br. s, 1.2H), 6.75 (s, 1H), 6.74 (s, 0.6H), 5.06-4.98 (m, 1H), 4.94-4.88 (m, 0.6H), 4.14 (d, ³*J*_{H-H} = 10.0 Hz, 0.6H), 4.05 (d, ³*J*_{H-H} = 6.8 Hz, 2.6H), 3.15 (d, ³*J*_{H-H} = 14.0 Hz, 1.6H), 2.85-2.69 (m, 1H), 2.55-2.52 (m, 1H), 2.34-2.32 (m, 1H), 2.23 (s, 1.8H), 2.22 (s, 3H), 1.94 (s, 3H), 1.83 (s, 3H), 1.81 (s, 3.6H), 1.28 (d, ³*J*_{H-H} = 11.2 Hz, 1H), 1.09 (d, ³*J*_{H-H} = 7.6 Hz, 1.8H), 1.05 (d, ³*J*_{H-H} = 7.6 Hz, 0.6H), 1.01 (d, ³*J*_{H-H} = 6.4 Hz, 3H), 0.78 (d, ³*J*_{H-H} = 6.4 Hz, 1.8H), 0.65 (d, ³*J*_{H-H} = 6.4 Hz, 3H). ¹³C{¹H}-NMR (100 MHz, CDCl₃): δ 174.7, 174.1, 172.2, 172.1, 138.3, 136.0, 135.8, 134.5, 134.4, 134.0, 133.5, 128.2, 128.1, 127.7, 127.6, 122.5, 122.3, 119.3, 119.1, 115.2, 114.7, 73.6, 73.5, 72.1, 71.3, 64.8, 41.8, 41.4, 34.8, 34.2, 20.1, 19.0, 18.2, 17.0, 16.9, 16.4, 16.3, 14.3.

### B.3.6. Rhodium Complexes

**General procedure for the synthesis of the [(NHC)Rh(cod)Cl] complexes.** In a flame-dried Schlenk were placed [Rh-µCl-(cod)]₂ (1.0 equiv.), *t*-BuOK (2.0 equiv.) and THF (0.03 M solution compared to the imidazolium salt) under argon atmosphere. The mixture was stirred at room temperature for 10 min, then imidazolium tetrafluoroborate salt (1.8 equiv.) was added and the resulting mixture was stirred for 2 h at room temperature. The mixture was concentrated under reduced pressure, then washed with pentane to isolate the desired product as a yellow solid.

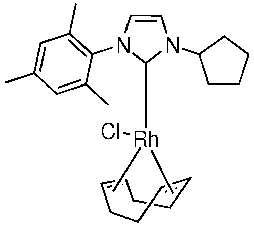

**B.3.6.1. [(3-cyclopentyl-1-mesityl-imidazol-2-ylidene)-(cyclooctadiene)rhodium chloride]** was prepared from [Rh-µCl-(cod)]₂ (25 mg, 0.05 mmol), *t*-BuOK (11 mg, 0.10 mmol), 3-cyclopentyl-1-mesityl-imidazolium tetrafluoroborate (31 mg, 0.09 mmol) in THF (3 mL). The desired rhodium complex was obtained as a yellow solid (41 mg, 85 %). ¹H-NMR (400 MHz, CDCl₃): δ 7.07 (br. s, 1H), 7.03 (d, ³*J*_{H-H} = 1.8 Hz, 1H), 6.90 (br. s, 1H), 6.75 (d, ³*J*_{H-H} = 1.8 Hz, 1H), 6.32-6.22 (m, 1H), 4.85-4.74 (m, 2H), 3.50-3.43 (m, 1H), 2.96-2.89 (m, 1H), 2.56-2.49 (m, 1H), 2.41 (s, 3H), 2.36 (s, 3H), 2.16-2.05 (m, 1H), 2.05-1.70 (m, 10H), 1.82 (s, 3H), 1.68-1.57 (m, 1H), 1.54-1.37 (m, 2H).¹³C{¹H}-NMR (100 MHz, CDCl₃): δ 182.2 (d, *J*_{C-Rh} = 51 Hz), 138.6, 137.3, 136.3, 134.4, 129.6, 128.2, 123.7, 123.7, 117.2, 97.3 (d, *J*_{C-Rh} = 7.0 Hz), 96.4 (d, *J*_{C-Rh} = 7.4 Hz), 68.5 (d, *J*_{C-Rh} = 14.4 Hz), 66.7 (d, *J*_{C-Rh} = 14.6 Hz), 62.5, 35.3, 34.7, 33.3, 31.3, 29.7, 27.7, 25.1, 24.8, 21.2, 19.9, 17.9.

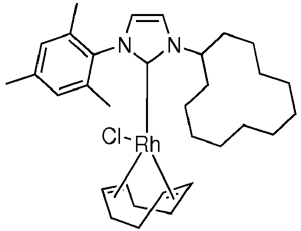

**B.3.6.2. [(3-cyclododecyl-1-mesityl-imidazol-2-ylidene)-(cyclooctadiene)rhodium chloride]** was prepared from [Rh-µCl-(cod)]₂ (25 mg, 0.05 mmol), *t*-BuOK (11 mg, 0.10 mmol), 3-cyclododecyl-1-mesityl-imidazolium tetrafluoroborate (40 mg, 0.09 mmol) in THF (3 mL). The desired rhodium complex was obtained as a yellow solid (25 mg, 44 %). ¹H-NMR (400 MHz, CDCl₃): δ 7.08 (br. s, 1H), 7.03 (d, ³*J*_{H-H} = 2.0 Hz, 1H), 6.91 (br. s, 1H), 6.74 (d, ³*J*_{H-H} = 2.0 Hz, 1H), 5.92-5.83 (m, 1H), 5.00-4.92 (m, 1H), 4.76-4.68 (m, 1H), 3.41-3.33 (m, 1H), 3.15-3.08 (m, 1H), 2.45 (s, 3H), 2.37 (s, 3H), 2.35-2.10 (m, 4H), 1.93-1.78 (m, 4H), 1.80 (s, 3H), 1.78-1.66 (m, 4H), 1.66-1.52 (m, 6H), 1.52-1.34 (m, 12H). ¹³C{¹H}-NMR (100 MHz, CDCl₃): δ 181.2 (d, *J*_{C-Rh} = 51.3 Hz), 138.6, 137.5, 136.6, 134.7, 129.7, 128.1, 123.3, 118.2, 97.3 (d, *J*_{C-Rh} = 7.2 Hz), 96.3 (d, *J*_{C-Rh} = 7.2 Hz), 68.8 (d, *J*_{C-Rh} = 14.4 Hz), 66.7 (d, *J*_{C-Rh} = 14.4 Hz), 58.6, 33.1, 32.9, 31.8, 30.4, 29.3, 26.7, 24.6, 24.5, 24.0, 23.9, 22.9, 22.7, 22.4, 22.3, 21.2, 20.0, 17.8.

### B.4. Representative procedure for the copper-catalyzed allylic alkylation of dialkylzinc reagents to allylic phosphates

A flame-dried Schlenk tube, under an argon atmosphere, was charged with [Cu(OTf)₂].C₆H₆ (0.5 mol%) and ligand (1 mol%) or silver NHC-complex (0.5 mol%). Freshly distillated ethyl acetate (0.5 mL) was then added, the reaction mixture was stirred 10 min at room temperature followed by the addition of *n*-BuLi (2.5 mol%). After the reaction was stirred 10 min at room temperature, Et₂Zn (3.0 mmol) was added. After cooling the reaction vessel to 0°C, the phosphate (1 mmol) was added. As soon as the addition of the substrate was completed, the ice bath was removed. The reaction mixture was stirred at room temperature until total consumption of the phosphate. Upon completion of the reaction, HCl 1N was added and the compound was extracted with diethyl ether. The combined organic layers were then washed with saturated NaHCO₃ aqueous solution, brine, and dried over MgSO₄. The solvents were carefully removed under *vacuum.* The crude product was purified by silica gel chromatography (100% pentane) to isolate the corresponding product as a colorless oil.

### B.S. Representative procedure for the copper-catalyzed asymmetric conjugate addition of dialkylzinc reagents to trisubstituted enones

A flame-dried Schlenk tube, under an argon atmosphere, was charged with [Cu(OTf)₂].C₆H₆ (0.5 mol%) and ligand (1 mol%). Freshly distillated ethyl acetate (0.5 mL) was then added, the reaction mixture was stirred 10 min at room temperature followed by the addition of *n*-BuLi (2.5 mol%). After the reaction was stirred 10 min at room temperature, Et₂Zn (3.0 mmol) was added. After cooling the reaction vessel to 0°C, the trisubstituted enone (1 mmol) was added. As soon as the addition of the substrate was completed, the ice bath was removed. The reaction mixture was stirred at room temperature until total consumption of the enone. Upon completion of the reaction, HCl 1N was added and the compound was extracted with diethyl ether. The combined organic layers were then washed with saturated NaHCO₃ aqueous solution, brine, and dried over MgSO₄. The solvents were carefully removed under *vacuum.* The crude product was purified by silica gel chromatography (5/1 pentane/Et₂O) to isolate the corresponding product as a colorless oil.

### B.6. Representative procedure for the palladium-catalyzed intramolecular α-arylation of amides

To a solution of *N*-(2-bromophenyl)-*N*-methyl-2-phenylpropamide (0.3 mmol) and catalyst (5 mol%) in anhydrous toluene (3 mL) was added sodium *tert*-butoxide (0.5 mmol) in one portion. The mixture was stirred at 50°C or 100°C until all starting material was consumed (24 h). The mixture was diluted with 50 mL ethyl acetate, filtered and the solvent evaporated under reduced pressure. The crude product was purified by flash chromatography on silica gel (pentane/ethyl acetate 7/1) to yield the desired product as a colorless oil.

### B.7. Representative procedure for the metal-catalyzed Kumada Cross-Coupling

A flame-dried Schlenk tube, under an argon atmosphere, was charged with metal salt (0.05 mmol) and ligand (0.05 mmol). Dried and degazed THF (0.5 mL) was then added followed by the addition of *n*-BuLi (0.055 mmol). The mixture was stirred 10 min at room temperature and chlorobenzene (0.5 mmol) was added. After cooling the reaction vessel to 0°C, the Grignard reagent (0.6 mmol) was added dropwise and the mixture was stirred at 60°C (for Fe(acac)₃) or room temperature (for Ni(acac)₂). Aqueous saturated NH₄Cl solution was then added and the aqueous layer was extracted three times with pentane. The combined organic extracts were dried over MgSO₄ and the solvent was removed under *vacuum.* 1,2-dichloroethane was then added as internal reference to determine the NMR yield.

## Claims

1. Metal alkylidene complex comprising a 1-aryl-3-alkyl-imidazol-2-ylidene ligand, wherein the aryl group of said 1-aryl-3-alkyl-imidazol-2-ylidene ligand is an aromatic and wherein the alkyl group of said 1-aryl-3-alkyl-imidazol-2-ylidene ligand is selected from the group consisting of a cyclic secondary aliphatic alkyl and a C₂-C₁₀-heteroalkyl, and wherein said metal is selected from the group consisting of Pd, Ag, Au, Ir, Rh, Cu, Ni, Mg, Zn, Ti, Pt and Fe, with the provision that the aryl group of said 1-aryl-3-alkyl-imidazol-2-ylidene ligand is other than an *ortho*-hydroxyaryl group when said metal is Pd and when said cyclic secondary aliphatic alkyl is cyclohexyl.

2. Metal alkylidene complex according to claim 1, wherein said complex is of general formula I: 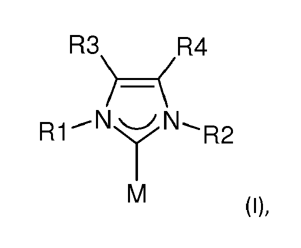 wherein
R1 is an aromatic group,
R2 is selected from the group consisting of a cyclic secondary aliphatic alkyl and a C₂-C₁₀-heteroalkyl,
R3 and R4 are selected independently from each other from the group consisting of hydrogen, halide and alkyl, and
M is said metal selected from the group consisting of Pd, Ag, Au, Ir, Rh, Cu, Ni, Mg, Zn Ti, Pt and Fe and is unsubstituted or substituted by one or more elements selected from the group consisting of hydrogen, halide, alkyl and heteroalkyl or a combination thereof.

3. Metal alkylidene complex according to one of the preceding claims, wherein the metal is selected from the group consisting of Pd, Ag, Au, Ir, Rh, Cu, Ni, and Fe.

4. Metal alkylidene complex according to one of the preceding claims, wherein R1 is chosen from the group consisting of 2,4,6-trimethylphenyl, 2,6-diisopropylphenyl, 2,6-dimethyl-4-hydroxyphenyl.

5. Metal alkylidene complex according to one of the preceding claims, wherein R2 is selected from the group consisting of cyclopentyl, cyclohexyl, cycloheptyl, cyclooctyl, cyclodecyl, cyclododecyl, cyclopentadecyl, isopinocampheyl, alkylcarboxylic acid, and alkylalcohol.

6. Metal alkylidene complex according to one of the preceding claims, wherein R3 and R4 are both hydrogen.

7. Metal alkylidene complex according to one of the preceding claims, wherein said complex is selected from the group consisting of [(3-cyclopentyl-1-mesityl-imidazol-2-ylidene)-silver chloride], [(3-cyclododecyl-1-mesityl-imidazol-2-ylidene)-silver chloride], [(3-(1R,2S,3S,5R)-isopinocampheyl-1-mesityl-imidazol-2-ylidene)-silver chloride], [(3-cyclododecyl-2-diisopropylphenyl-imidazol-2-ylidene)-silver chloride], [3-((S)-2N-3-methylbutanoic acid)-1-mesityl-imidazol-2-ylidene)-silver chloride], [(3-cyclododecyl-1-mesityl-imidazol-2-ylidene)-copper chloride], [(3-(1R,2S,3S,5R)-isopinocampheyl-1-mesityl-imidazol-2-ylidene)-copper chloride], [(3-cyclododecyl-1-mesityl-imidazol-2-ylidene)-gold chloride], [(3-(1R,2S,3S,5R)-isopinocampheyl-1-mesityl-imidazol-2-ylidene)-gold chloride], [3-((S)-2N-3-methylbutanol)-1-mesityl-imidazol-2-ylidene)-gold chloride], [(3-cyclopentyl-1-mesityl-imidazol-2-ylidene)-(cyclooctadiene)-iridium chloride], [(3-cyclohexyl-1-mesityl-imidazol-2-ylidene)-(cyclooctadiene)-iridium chloride], [(3-cycloheptyl-1-mesityl-imidazol-2-ylidene)-(cyclooctadiene)-iridium chloride], [(3-cyclooctyl-1-mesityl-imidazol-2-ylidene)-(cyclooctadiene)-iridium chloride], [(3-cyclododecyl-1-mesityl-imidazol-2-ylidene)-(cyclooctadiene)-iridium chloride], [(3-cyclopentyl-1-mesityl-imidazol-2-ylidene)-(bis-(carbon monoxide))-iridium chloride], [(3-cyclohexyl-1-mesityl-imidazol-2-ylidene)-(bis-(carbon monoxide))-iridium chloride], [(3-cycloheptyl-1-mesityl-imidazol-2-ylidene)-(bis-(carbon monoxide))-iridium chloride], [(3-cyclooctyl-1-mesityl-imidazol-2-ylidene)-(bis-(carbon monoxide))-iridium chloride], [(3-cyclododecyl-1-mesityl-imidazol-2-ylidene)-(bis-(carbon monoxide))-iridium chloride], [(3-cyclododecyl-1-mesityl-imidazol-2-ylidene)-(allyl)-palladium chloride], [(3-cyclododecyl-1-diisopropylphenyl-imidazol-2-ylidene)-(allyl)-palladium chloride], [3-((S)-2N-3-methylbutanoic acid)-1-mesityl-imidazol-2-ylidene)-(allyl)-palladium], [(3-cyclododecyl-1-diisopropylphenyl-imidazol-2-ylidene)-(allyl)-palladium chloride], [(3-cyclopentyl-1-mesityl-imidazol-2-ylidene)-(cyclooctadiene)-rhodium chloride], or [(3-cyclododecyl-1-mesityl-imidazol-2-ylidene)-(cyclooctadiene)-rhodium chloride].

8. Use of a metal alkylidene complex according to one of the preceding claims as a catalyst.

9. Use of a metal alkylidene complex according to one of the preceding claims as a catalyst in an organo-metallic reaction.

10. Use of a metal alkylidene complex according to one of the preceding claims as a catalyst in a chemical cross-coupling reaction selected from the group consisting of conjugate addition, allylic alkylation, ketone arylation and Kumada reaction.

11. Use of a metal alkylidene complex according to one of the preceding claims as a precursor reagent to generate an *in situ* metal alkylidene complex according to one of the preceding claims.
